# EUROPEAN PATENT APPLICATION

(11) **EP 1 632 859 A1**
(43) Date of publication of application: **08.03.2006**
(21) Application number: 04729709.8
(22) Date of filing: 27.04.2004
(51) Int. Cl.: G06F 12/14, G06F 15/00, G06Q 10/00

(54) **DIGITAL INFORMATION DISTRIBUTION CONTROL METHOD AND DISTRIBUTION CONTROL SYSTEM**

(30) Priority: 09.05.2003 JP 2003131005
(71) Applicant: NEC CORPORATION, Minato-ku, Tokyo 108-8001 (JP)
(72) Inventor: TAGUCHI, Daigo, c/o NEC Corporation, Tokyo 1088001 (JP); KAJI, Yuichi, c/o NEC Corporation, Tokyo 1088001 (JP); NODA, Jun, c/o NEC Corporation, Tokyo 1088001 (JP)
(74) Representative: Wenzel & Kalkoff
(86) International application number: PCT/JP2004/006042
(87) International publication number: WO 2004/099998

(57) **Abstract**

A server (1) generates delivery data obtained by adding distribution control information which designates the possibility/impossibility of data transfer, the necessity/unnecessity of encryption, the possibility/impossibility of server inquiry, and the like to contents data such as digital contents, an electronic ticket, or the like and delivers the delivery data to a mobile information terminal (2). The delivery data is stored in the mobile information terminal (2), and freely used by a service user. Although the delivery data can be backed up in another user information terminal, restoration and transfer of the delivery data are restricted according to the added distribution control information.

## Description

### TECHNICAL FIELD

The present invention relates to a digital information management technique to prevent illegal access to digital information and, more particularly, to a digital information distribution control system and method designed in consideration of prevention of illegal access to a service to be rendered and convenience of service users.

### BACKGROUND ART

In recent years, with popularization of a digital contents delivery service, application software, music, videos, magazines, tickets, and the like have been delivered through a network. Since thesecontents are copyrighted works or merchandise, it is increasingly important to protect the contents.

For example, in a service which delivers a ringing tone of a mobile telephone, an SMAF (Synthetic music Mobile Application Format) is mainly employed as a technique for protecting the copyright of the ringing tone. The SMAF is a data format specification designed by YAMAHA CORPORATION, and is mainly used to define a data format of multimedia contents reproduced by a mobile information terminal or a mobile telephone. According to the SMAF, three copy statuses, i.e., (A) storable/transferable, (B) storable/untransferable, and (C) unstorable/untransferable can be set in SMAF data. Therefore, depending on the copy statuses, storage of data or transfer of data to another mobile telephone is possible/impossible, so that illegal data transfer or the like can be prevented.

Contents downloaded on a mobile telephone as described above are desirably backed up on a personal computer of a user in case that the mobile telephone is replaced with a new one or that the contents are deleted by an operation mistake or the like. However, unlimited backup may allow a user other than the legal user to illegally - copy the contents. For this reason, a service provider must also consider copyright protection.

In Japanese Laid-open Patent Publication No. 2002-185579 (Patent document 1), a backup method designed in consideration of the above copyright protection is disclosed. In the conventional method, a production number and a telephone number of a mobile telephone are added when a JAVA (tradename) application is backed up from the mobile telephone into a personal computer, and the production number and/or the telephone number of the mobile telephone is compared in restoration of the application, so that the JAVA (tradename) application is prevented from being illegally used.

A digital signature technique which detects the presence/absence of alteration of data, an encryption technique which prevents data from being illegally browsed or intercepted, and the like are used to make it possible to achieve data protection in backup or restoration.

Patented document 1: Japanese Laid-open Patent Publication No. 2002-185579(section number 0018-0023 ,0026-00258, Fig.4)

### DISCLOSURE OF THE INVENTION

However, even though a digital signature or encryption technique is combined with the conventional backup method, the following illegal use of data cannot be prevented. For example, a service user receives an electronic ticket having a remaining service count of 10 from a service provider and stores the electronic ticket in a mobile telephone. The electronic ticket is an electronic ticket, the remaining service count of which decreases each time a corresponding service is enjoyed. The service user backs up the electronic ticket having the remaining service count of 10 into a personal computer by the conventional backup method. The service user enjoys services ten times by a mobile telephone along ordinary procedures. Thereafter the backup data is restored. In this case, the data is normally restored because the mobile telephone is not changed. Therefore, in the mobile telephone, the electronic ticket having the remaining service count of 10 is normally restored. The mobile telephone is set in a service available state again.

In the above conventional technique, copyright protection of a service provider which delivers digital contents or electronic tickets to mobile communication devices such as a mobile information terminal and a mobile telephone and convenience of a service user who enjoys services cannot be sufficiently compatible.

Therefore, it is an object of the present invention to provide a digital information distribution control system and method which can assure both copyright protection of a service provider and convenience of a service user.

It is another object of the present invention to provide a digital information distribution control system and method which can reliably determine legality of backup and restoration of delivered data.

Furthermore, it is still another object of the present invention to provide a digital information distribution control system and method which can flexibly set conditions for backing up and restoring delivered data.

The distribution control method according to the present invention is a digital information distribution control method in a system having a server for performing a delivery service of digital information and an information processing terminal for receiving the delivery service of the digital information, wherein delivery data including the digital information and distribution control information representing a data transfer control condition is delivered from the server to the information processing terminal, the delivery data is stored in the information processing terminal, and transfer of information including the delivery data is controlled between the information processing terminal and another information processing terminal depending on the distribution control information.

In the transfer control, the information including the delivery data generated by using unique information of the information processing terminal is transferred and stored in the other information processing terminal, and, before the information including the delivery data stored in the other information processing terminal is re-stored in the information processing terminal, it is determined depending on the distribution control information whether re-storing in the information processing terminal is possible or impossible. Alternatively, in the transfer control, the information including the delivery data generated by using the unique information of the information processing terminal is transferred and stored in the other information processing terminal, and, before the information including the delivery data stored in the other information processing terminal is re-stored in the information processing terminal, it is determined depending on the distribution control information whether inquiry at the server is possible or impossible.

The distribution control information desirably includes at least one of a transfer possibility/impossibility determination condition of the information including the delivery data and an inquiry possibility/impossibility determination condition at the server.

According to one aspect of the present invention, in a digital information distribution control method in a system having a server for performing a delivery service of digital information and an information processing terminal for receiving the delivery service of the digital information, delivery data including the digital information and distribution control information representing a data transfer control condition is delivered from the server to the information processing terminal, the delivery data is stored in the information processing terminal, first safing data including the delivery data is generated by using terminal unique information allocated to the information processing terminal and transferred to another information processing terminal, before delivery data included in safing data stored in the other information processing terminal is re-stored in the information processing terminal, a safing data transmission request is transmitted to the other information processing terminal, based on the terminal unique information of the information processing terminal, and terminal unique information and distribution control information included in second safing data corresponding to the safing data transmission request, it is determined whether the delivery data included in the second safing data can be re-stored in the information processing terminal or not, and the delivery data included in the second safing data is stored in the information processing terminal when the delivery data can be re-stored.

According to the present invention, there is provided a mobile information terminal which receives delivery of the digital information from a server for performing a delivery service of the digital information and which can perform data transfer with another information processing terminal for backup, including: delivery data storing unit for receiving and storing delivery data including distribution control information representing a condition to regulate data transfer and the digital information from the server; terminal unique information storing unit for storing terminal unique information allocated to the mobile information terminal; safing data generating unit for generating first safing data including the delivery data by using the terminal unique information to transfer the delivery data from the delivery data storing unit to the other information processing terminal, and for transmitting the first safing data to the other information processing terminal; data transmission request generating unit for performing data transmission request to the other information processing terminal before the second safing data is received from the other information processing terminal to re-store delivery data included in the second safing data in the delivery data storing unit; and safing data verifying unit for verifying whether the second safing data can be re-stored or not by using the terminal unique information of the mobile information terminal and terminal unique information and distribution control information included in the second safing data when the second safing data is received from the other information processing terminal as a response of the data transmission request, and for storing the delivery data included in the second safing data in the delivery data storing unit when the second safing data can be re-stored.

According to the present invention, there is provided a server which performs a delivery service of digital information to an information processing terminal, including server unique information storing unit for storing server unique information allocated to the server; delivery data management unit for generating delivery data including the digital information and distribution control information representing a data transfer control condition to deliver the delivery data to the information processing terminal; and safing data updating unit for, when a safing data inquiry including terminal unique information of the information processing terminal and requested safing data is received, determining whether updating of the safing data included in the safing data inquiry is possible or impossible, and for updating the safing data when the updating is possible to return the updated safing data as a response of the safing data inquiry.

According to the present invention, there is provided an information processing apparatus which can be connected to a mobile information terminal for receiving delivery data including distribution control information representing a condition to regulate data transfer and digital information from a server and which backs up the delivery data received by the mobile information terminal, including: safing data storing unit for storing first safing data including the delivery data generated by using terminal unique information allocated to the mobile information terminal; and determining unit for receiving safing data transmission request for re-storing the delivery data included in the first safing data stored in the safing data storing unit from the mobile information terminal and determining whether the stored first safing data is returned to the mobile information terminal as second safing data based on the received data transmission request and terminal unique information and distribution control information of the first safing data stored in the safing data storing unit.

According to the present invention, there is provided a distribution control system at least having a server for performing a delivery service of digital information, a first information processing terminal for receiving delivery of the digital information, and a second information processing terminal which can perform data transfer with the first information processing terminal, wherein the server has at least a delivery data management unit for generating delivery data obtained by adding distribution control information representing a condition to regulate data transfer to the digital information to transmit the delivery data to the first information processing terminal; the first information processing terminal has at least a delivery data storing unit for storing the delivery data, terminal unique information storing unit for storing terminal unique information allocated to the first information processing terminal, a safing data generating unit for generating first saf ing data including the delivery data by using the terminal unique information to transfer the delivery data from the delivery data storing unit to the second information processing terminal, and for transmitting the first safing data to the second information processing terminal, a data transmission request generating unit for receiving second safing data from the second information processing terminal and performing data transmission request to the second information processing-terminal to re-store the delivery data included in the second safing data in the delivery data storing unit, and a safing data verifying unit for verifying whether the second safing data can be re-stored or not by using the terminal unique information when the second saf ing data is received from the second information processing terminal as a response of the data transmission request, and for storing delivery data included in the second safing data in the delivery data storing unit when the second safing data can be re-stored; and the second information processing terminal has at least a safing data storing unit for storing the first safing data transmitted from the first information processing terminal, and a determining unit for determining, based on the data transmission request and terminal unique information and distribution control information of safing data stored in the safing data storing unit, whether the stored safing data is returned to the first information processing terminal as the second safing data or not.

According to the present invention, there is provided a server program which causes a computer to realize a server function for performing a delivery service of digital information to an information processing terminal, including: the step of generating delivery data having the digital information and distribution control information representing a data transfer control condition to deliver the delivery data to the information processing terminal; the step of, when safing data inquiry including terminal unique information of the information processing terminal and requested safing data is received, determining whether updating of the safing data included in the safing data inquiry is possible or impossible; and the step of updating the safing data when the updating is possible to return the updated safing data as a response of the safing data inquiry.

According to the present invention, there is provided a program for a mobile information terminal which causes a computer to receive delivery of the digital information from a server for performing a delivery service of digital information and to execute data transfer with another information processing terminal for backup, including: the step of receiving delivery data including distribution control information representing a condition to regulate data transfer and the digital information from the server and storing the delivery data; the step of generating first safing data including the delivery data by using the terminal unique information to transfer the delivery data to the other information processing terminal and transmitting the first safing data to the other information processing terminal; the step of performing the data transmission request to the other information before second safing data is received from the other information processing terminal to re-store delivery data included in the second safing data in the delivery data storing unit; the step of, when the second safing data is received from the other information processing terminal as a response of the data transmission request, verifying whether the second safing data can be re-stored or not by using the terminal unique information of the mobile information terminal and terminal unique information and distribution control information included in the second safing data; and the step of re-storing delivery data included in the second safing data when the second safing data can be re-stored.

As described above, according to the present invention; the delivery data stored in the information processing terminal is obtained by adding a distribution control information representing a condition to regulate data transfer to digital information (contents data such as digital contents and an electronic ticket). As the distribution control information, for example, a possibility/impossibility determination condition of data transfer and a possibility/impossibility determination condition of server inquiry. These conditions can be set by a description by a flag or a procedure description such as a program. The digital information included in the delivery data is stored in the information processing terminal and freely used by a service user. However, transfer of the digital information is regulated by the added distribution control information such that a right of a service provider is protected. In this manner, the right protection of the delivery data service provider and the convenience of the service user can be assured.

When delivery data included in safing data backed up by another information processing terminal is restored, any one of prohibition of restoration, unconditional restoration permission, and server inquiry can be set by the above distribution control information. In the server inquiry, a server determines the legality of restoration in the information processing terminal and whether updating of the safing data is possible or impossible. When the safing data can be updated, the updated safing data is returned. In this manner, the legality of backup and restoration can reliably be determined. Since the number of times of inquiry at the server can be reduced by setting the distribution control information, loads on a network and the sever can be reduced.

As described above in detail, according to the present invention, the service provider adds the distribution control information to contents data to deliver the contents data, so that distribution of the contents data can be controlled. For example, by setting the distribution control information, updating determination inquiry at the server or an unupdated safing data restoration can be selected to make it possible to suppress increases in load on the network and the server. Furthermore, by using the distribution control information, backup of the delivery data and legality of the restoration can reliably be determined , an advantage for a user and an advantage for a service provider can be compatible. In particular, data transfer and verification can be performed by digital signature and an encryption technique to make it possible to perform more reliable legality determination and data protection. Since the data transfer can be controlled by setting the distribution control information, conditions for backup and restoration can flexibly be set.

Distribution control information which assures that contents data (for example, an electronic ticket) restored in a mobile information terminal coincides with contents data managed by a service provider server is set to make it possible to assure that the contents data stored in the mobile information terminal is legal. For this reason, when the contents data is checked to perform providing/lending management of digital information or merchandise or admission management of boarding of an automobile/ship or the like, providing/lending and admission management can be performed by using reliable contents data without inquiry at the service provider server. The number of times of a restore operation with loss or the like may be considerably smaller than the number of times of an ordinary contents data using operation, the load on an electronic ticket server operated by the service provider can be reduced remarkably.

Furthermore, a system manager may perform a process of issuing a service provider ID and a service provider certification to the service provider and a process of issuing and storing terminal identification information, a user ID, a terminal certification, and the like to the mobile information terminal when the service provider starts a service and when the service user begins to use a new mobile information terminal. Therefore, the service user has no process each time backup and restore of digital contents and an electronic ticket are executed. For this reason, in an environment in which a large number of service providers and a large number of mobile information terminals are present and a lot of digital contents and electronic tickets are distributed, processes performed by a systemmanager are proportional to the number of service providers and the number of mobile information terminal, and digital information distribution control excellent in scalability can be realized.

Digital contents and an electronic ticket backed up in the user information terminal are encrypted as needed, and browsing or illegal copy in the user information terminal can be prevented. Since data altered in the user information terminal cannot be restored in the mobile information terminal, the service provider can permit the service user at ease to back up and restore the digital contents and the electronic ticket. For this reason, the service user performs backup and restoration in preparation for loss of the mobile information terminal, thereby improving convenience.

### BRIEF DESCRIPTION OF THE DRAWINGS

The above objects and other objects, other characteristics, and other advantages will be apparent by the following embodiments and the following accompanying drawings.
FIG. 1 is a block diagram showing a schematic functional configuration of a digital information distribution control system according to a first embodiment of the present invention.
FIG. 2 is a flow diagram showing an entire sequential operation of the digital information distribution control system in FIG. 1 and a schematic operation flow of each terminal and server.
FIG. 3 is a block diagram showing a more detailed functional configuration of the digital information distribution control system shown in FIG. 1.
FIG. 4 is a pattern diagram showing terminal unique information stored in a terminal unique information storing unit 202 of a mobile information terminal 2.
FIG. 5 is a pattern diagram showing server unique information stored in a server unique information storing unit 103 of a service provider server 1.
FIG. 6(A) is a pattern diagram showing an example of the configuration of delivery data generated by a delivery data generating unit 2103.
FIG. 6 (B) is a pattern diagram showing an example of a description of the distribution control information of the delivery data.
FIG. 7(A) is a pattern diagram showing an example of a configuration of backup safing data generated by a safing data generating unit 2203 and designated such that a contents body is not encrypted in transmission.
FIG. 7(B) is a pattern diagram showing an example of a configuration of backup safing data generated by the safing data generating unit 2203 and designated such that the contents body is encrypted in transmission.
FIG. 8 is a pattern diagram showing an example of a configuration of a safing data request generated by a safing data request generating unit 2204.
FIG. 9 is a flow chart showing an example of safing data updating determining operation of the updating necessity/unnecessity determining unit 2303.
FIG. 10 is a pattern diagram showing an example of a configuration of an updating request.
FIG. 11(A) is a pattern diagram showing an example of a configuration of updated safing data generated by a safing data updating unit 2109 and designated such that a contents body is not encrypted in transmission.
FIG. 11(B) is a pattern diagram showing an example of a configuration of updated safing data generated by a safing data updatingunit 2109 and designated such that a contents body is encrypted in transmission.
FIG. 12 is a flow chart showing an example of a data safety checking operation in a data safety checking unit 2206.
FIG. 13 is a schematic system functional diagram showing an example of a first application of a digital information distribution control system according to a first embodiment of the present invention.
FIG. 14 is a schematic block diagram showing another example of a service provider server 1 according to the first embodiment.
FIG. 15 is a schematic block diagram showing other examples of a mobile information terminal 2 and a user information terminal 3 according to the first embodiment.
FIG. 16 is a block diagram showing a schematic functional configuration of a digital information distribution control system according to a second embodiment of the present invention.
FIG. 17 is a schematic system functional diagram showing an application of the digital information distribution control system according to the second embodiment.
FIG. 18 is a schematic system functional diagram showing a digital information distribution control system according to a third embodiment of the present invention.
FIG. 19 is a flow chart showing an entire sequential operation of the digital information distribution control system in FIG. 18 and a schematic operation flow of each terminal and server.
FIG. 20 is a flow chart showing an example of a data safety checking operation of a data safety checking unit 2206 when updated safing data including expiration-date information is received.
FIG. 21 is a pattern diagram showing an example of a configuration of a safing data request in a fifth embodiment of the present invention.
FIG. 22 is a flow chart showing an example of a data safety checking operation of the data safety checking unit 2206 when updated safing data including a random number r is received.
FIG. 23 is a pattern diagram showing an example of distribution control information in a sixth embodiment of the present invention.

### BEST MODE FOR CARRYING OUT THE INVENTION

### 1. First Embodiment

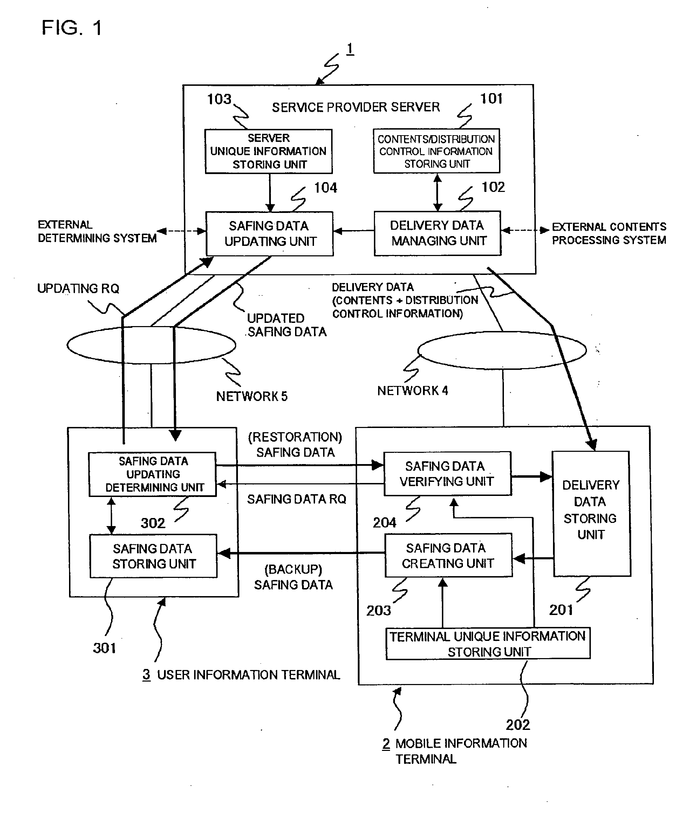

FIG. 1 is a block diagram showing a schematic functional configuration of a digital information distribution control system according to a first embodiment of the present invention. The system according to the embodiment includes a service provider server 1, a mobile information terminal 2 having a communication function, and a user information terminal 3 having a communication function. The service provider server 1 and the mobile information terminal 2 can be connected to a network 4, and the service provider server 1 and the user information terminal 3 can be connected to a network 5.

### (1) Outline of System Configuration

The service provider server 1 adds distribution control information to contents data such as digital contents or an electronic ticket, and transmits the contents data as delivery data to the mobile information terminal 2 through the network 4. Furthermore, as will be described later, the service provider server 1 also has a function of transmitting updated data in response to inquiry from the user information terminal 3.

The mobile information terminal 2 stores the delivery data received from the service provider server 1. The mobile information terminal 2 is a mobile communication terminal or a mobile telephone held by a service user. The service user can use an electronic ticket (admission ticket or the like) by, for example, a predetermined service point. Furthermore, as will be described later, the mobile information terminal 2 also has a function of backing up and restoring the delivery data.

The user information terminal 3 can be connected to the mobile information terminal 2 through a cable or a wireless system to make it possible to perform backup and restoration of the delivery data stored in the mobile information terminal 2. As will be described later, when the backed-up delivery data is restored to the mobile information terminal 2, the user information terminal 3 can inquire at the service provider server 1 according to a predetermined condition. As the user information terminal 3, a personal computer having a communication function which can connect to the service provider server 1 through the network 5 is typically used. However, another backup computer connected to the network 5 may be used.

Referring to Fig. 1, the above configuration will be described in further detail. The service provider server 1 includes a contents/distribution control information storing unit 101, a delivery data managing unit 102, a server unique information storing unit 103, and a safing data updating unit 104. The contents/distribution control information storing unit 101 stores contents data such as digital contents or an electronic ticket and distribution control information.

The distribution control information is information for controlling distribution of delivery data. As will be described later in detail, the information designates at least one or more of the possibility/impossibility condition of data transfer between the mobile information terminal 2 and the user information terminal 3, the necessity/unnecessity of encryption in data transmission, and the possibility/impossibility of updating inquiry at the service provider server 1. The distribution control information can be expressed by a control flag or a procedural description.

The delivery data managing unit 102 manages the contents data and the distribution control information stored in the contents/distribution control information storing unit 101, delivers delivery data generated from the contents data and the distribution control information to the mobile information terminal 2, or outputs the delivery data to the safing data updating unit 104. The delivery data managing unit 102 may manage the contents data in cooperation with an external contents processing system. For example, when the contents data is an electronic ticket, the electronic ticket is updated each time a service user uses the service. Therefore, the updating contents must be reflected on the contents data stored in the contents/distribution control information storing unit 101. In this case, the delivery data managing unit 102 is connected to the external contents processing system through a network or the like.

The server unique information storing unit 10.3 stores server unique information including identification information allocated to the service provider server 1, information for creating and verifying a digital signature, and the like.

The safing data updating unit 104 determines the possibility/impossibility of safing data updating depending on the safing data updating request received from the user information terminal 3. When the safing data can be updated, the safing data updating unit 104 executes the updating of the safing data. The safing data updating unit 104 may perform the determination of the possibility/impossibility of the safing data updating depending on the safing data updating request in cooperation with an external determining system.

When the mobile information terminal 2 is replaced with a new one because of, for example, loss or aging, the external determining system registers a change of terminal identification information with the change of the terminal and determines whether the contents data of the updating request can be reissued or not even after the mobile information terminal 2 is changed. When the terminal identification information of the updating request is attributed to the change of the terminal, it is determined that the contents data can be reissued and updated. When the terminal identification information of the updating request is not related to the change of the terminal, it is determined that updating is impossible. The determining method of the external determining system is not limited to the above method. Another determining method using information included in the updating request may be used.

The mobile information terminal 2 includes a delivery data storing unit 201, a terminal unique information storing unit 202, a safing data creating unit 203, and a safing data verifying unit 204. The delivery data storing unit 201 restores the delivery data received from the service provider server 1 or the backed-up delivery data input from the safing data verifying unit 204.

The terminal unique information storing unit 202 stores terminal identification information allocated to the mobile information terminal 2, information for creating and verifying a digital signature, and terminal unique information including a contents encrypting key, certification information, a contents decrypting key, and the like.

The safing data creating unit 203 uses the delivery data stored in the delivery data storing unit 201 and the terminal unique information stored in the terminal unique information storing unit 202 to create backup safing data, and transmits the backup safing data to the user information terminal 3. The safing data, as will be described later, can prevent the contents data included in the safing data from being illegally browsed and can detect the presence/absence of alteration.

When the safing data verifying unit 204 tries to restore backup data, the safing data verifying unit 204 requests the user information terminal 3 to transmit the safing data backed up in the user information terminal 3 (safing data request). When the safing data verifying unit 204 receives the safing data from the user information terminal 3 which responds to the request,the safing data verifying unit 204 verifies whether the delivery data included in the received safing data can be stored or not. When the delivery data can be stored, the received delivery data is stored in the delivery data storing unit 201.

The user information terminal 3 has a safing data storing unit 301 and a safing data updating determining unit 302. The safing data storing unit 301 stores backup safing data received from the mobile information terminal 2.

The safing data updating determining unit 302 checks the identification information or the distribution control information included in the backup safing data stored in the safing data storing unit 301 in response to the request from the mobile information terminal 2 to determine whether updating of the safing data is necessary or not. When updating is not necessary, the safing data is transmitted to the mobile information terminal 2 as restoration safing data. When updating is necessary and when updating of the safing data by server inquiry is permitted, the safing data updating determining unit 302 transmits the safing data to the service provider server 1, requests the service provider server 1 to update the safing data, and receives the safing data updated by the service provider server 1. The safing data received from the service provider server 1 is transmitted to the mobile information terminal 2 as restoration safing data.

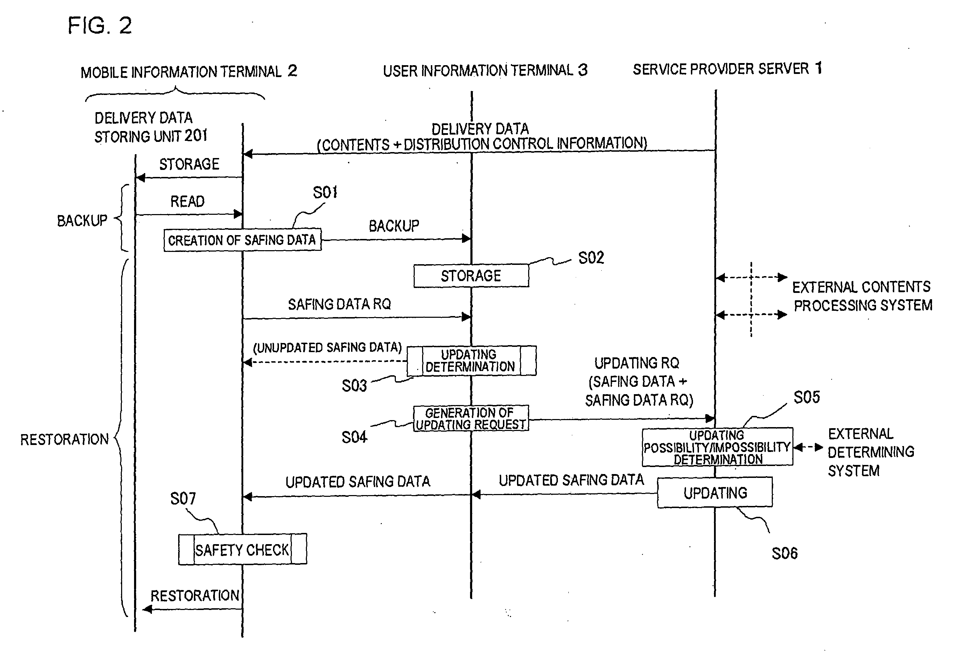

FIG. 2 is a flow chart showing an entire sequential operation of the digital information distribution control system in FIG. 1 and a schematic operation flow of terminals and a server.

As described above, in the digital information distribution control system according to the embodiment, delivery data obtained by adding distribution control information to contents data is delivered from the service provider server 1 to the mobile information terminal 2, the possibility/impossibility of data transfer, the necessity/unnecessity of encryption in data transfer, the possibility/impossibility of updating inquiry at the service provider server 1, and the like are designated by the distribution control information.

As shown in FIG. 2, the received delivery data is stored in the delivery data storing unit 201 of the mobile information terminal 2 and used. When the delivery data is backed up, the delivery data is read from the delivery data storing unit 201, and safing data which can detect alteration or the like is created by using the terminal unique information stored in the terminal unique information storing unit 202 (step S01) . The safing data is transmitted to the user information terminal 3 and stored in the safing data storing unit 301 of the user information terminal 3 (step S02).

When the backed-up delivery data is restored, the safing data request is transmitted from the mobile information terminal 2 to the user information terminal 3. The safing data updating determining unit 302 uses identification information of the safing data request, identification information of the backup safing data, and distribution control information to determine whether the backup safing data can be directly returned or not or whether inquiry at the service provider server 1 is necessary or not before data transfer (step 303) . When the inquiry is necessary, an updating request is generated from the backup safing data and the safing data request and transmitted to the service provider server 1 (step S04).

When the service provider server 1 receives the updating request, the service provider server 1 determines whether the contents data included in the safing data is correct information which is not altered or not and determines the possibility/impossibility of updating in cooperation with an external determining system (step S05). When it is determined that the contents data is correct information and can be updated, the latest delivery data is read from the delivery data managing unit 102, and updated safing data is generated and returned to the user information terminal 3 (step S06) . The service provider can set a restoration condition in advance as distribution control information. However, the information cannot be given as distribution control information even though a user replaces the mobile information terminal 2 with a new one after the contents data is delivered or even though a family member contracts a mobile information terminal at a family-plan discount. For this reason, even for the service provider server 1, the change of the mobile information terminal 2 after the contents delivery, the family-plan-discount contract information, or the like are unknown information. Therefore, in order to control the possibility/impossibility of data updating depending on the change of the mobile information terminal, the family-plan-discount contract, or the like, the service provider server 1 must cooperate with the external determining system.

When the safing data updating determining unit 302 receives the updated safing data from the service provider server 1 in response to an updating request, the safing data updating determining unit 302 transmits the updated safing data to the mobile information terminal 2 as restoration safing data. When safing data read from the safing data storing unit 301 is data which does not require server inquiry, the safing data updating determining unit 302 directly transmits the data to the mobile information terminal 2 as the restoration safing data (step S03).

When the safing data updating determining unit 302 receives the safing data from the user information terminal 3 as a response of the safing data request, the safing data verifying unit 204 of the mobile information terminal 2 determines whether the received safing data is correct information which is not altered or not and whether the safing data may be stored in the delivery data storing unit 201 or not with reference to the terminal unique information (step S07) . Only the delivery data of the safing data which is correct information and permitted to be stored is stored in the delivery data storing unit 201, so that restoration of the delivery data is completed.

With the above operation, legality of backup and restoration of the delivery data can be reliably determined, and an advantage for a user and an advantage for a service provider can be compatible. In particular, data transfer and verification are performed by using digital signature and an encryption technique as will be described later to make it possible to achieve more reliably determination of legality and data protection. Since data transfer can be controlled by setting the distribution control information, conditions for backup and restoration can be flexibly set. Furthermore, the setting of the distribution control information makes it possible to select updating determining inquiry at the server 1 and unupdated safing data restoration, so that loads on the network and the server can be avoided from being unnecessarily increased.

The configuration and the operation of the embodiment will be described below in more detail with reference to a concrete example of the digital information distribution control system.

### (2) Functional Configuration of System

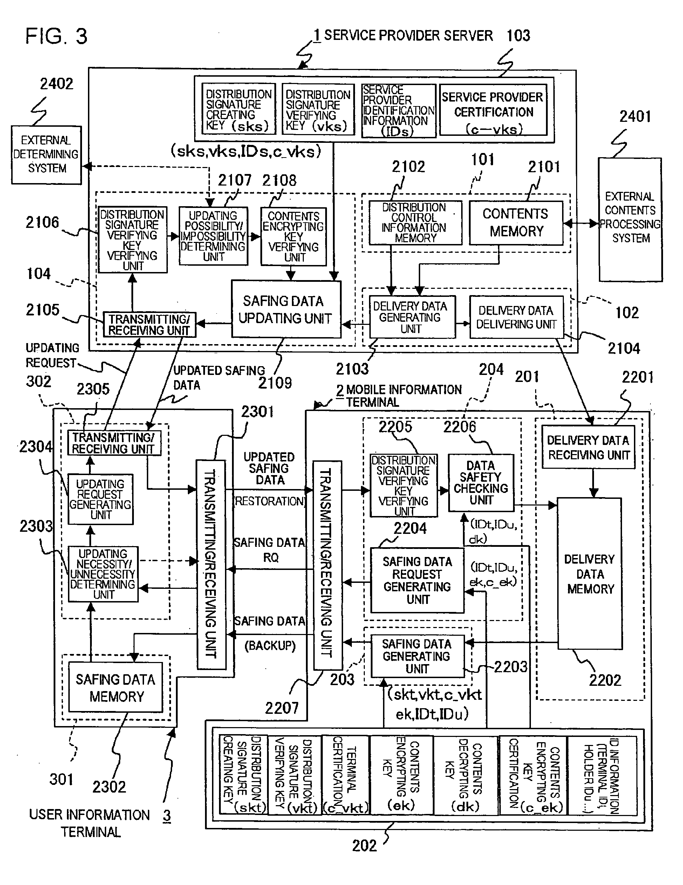

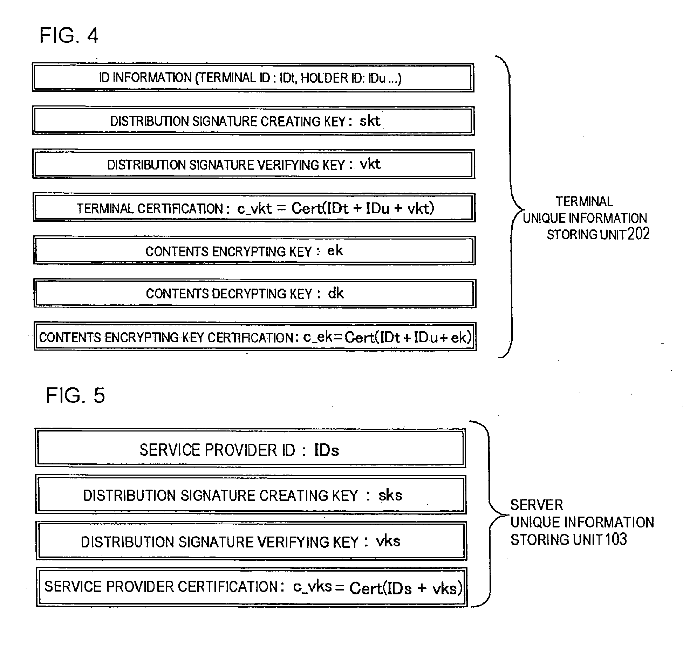

FIG. 3 is a block diagram showing a more detailed functional configuration of the digital information distribution control system shown in FIG. 1. FIG. 4 is a pattern diagram showing terminal unique information stored in the terminal unique information storing unit 202 of the mobile information terminal 2, and FIG. 5 is a pattern diagram showing server unique information stored in the server unique information storing unit 103 of the service provider server 1.

### Mobile Information Terminal

The delivery data storing unit 201 has a delivery data receiving unit 2201 for receiving delivery data from the service provider server 1 and a delivery data memory 2202 for storing the received delivery data.

The terminal unique information storing unit 202 stores, as shown in FIG. 4, a distribution signature creating key skt for creating a digital signature given to information distributed between the mobile information terminal 2 and the user information terminal 3, a distribution signature verifying key vkt for verifying the given digital signature, a terminal certification c_vkt serving as a digital certification for the distribution signature verifying key vkt, a contents encrypting key ek for encrypting contents data, a contents decrypting key dk corresponding to the contents encrypting key ek, a contents encrypting key certification c_ek serving as a digital certification for the contents encrypting key ek, and ID information for identifying a holder of a mobile information terminal or a mobile information terminal. The ID information is, for example, terminal identification information IDt uniquely allocated to each mobile information terminal, holder identification information IDu uniquely allocated to each holder. However, the ID information is not limited to the above pieces of information. For example, the ID information may include a group ID, a family ID, or the like for classifying mobile information terminals and holders in groups. It is assumed that the ID information in the embodiment is constituted by the terminal identification information IDt and the holder identification information IDu.

The safing data creating unit 203 has the safing data generating unit 2203. The safing data generating unit 2203 generates safing data including the terminal identification information IDt, the holder identification information IDu, the delivery data, a distribution signature S1, a distribution signature verifying key vkt, and a terminal certification c_vkt. In this case, the distribution signature S1 is generated by executing a digital signature process using the distribution signature creating key skt to the information including the delivery data, the terminal identification information IDt, and the holder identification information IDu. As will be described later, by using data obtained by encrypting the contents data included in the delivery data by using the contents encrypting key ek, safing data may be generated. The safing data generated in this manner is transmitted to the user information terminal 3 through a transmitting/receiving unit 2207.

The safing data verifying unit 204 has a safing data request generating unit 2204, a distributionsignature verifying key verifying unit 2205, and a data safety checking unit 2206.

The safing data request generating unit 2204 generates a safing data request including the terminal identification information IDt and the holder identification information IDu or a safing data request including the terminal identification information IDt, the holder identification information IDu, the contents encrypting key ek, and the contents encrypting key certification c_ek to request safing data stored in the user information terminal 3. The generated safing data request is transmitted to the user information terminal 3 through the transmitting/receiving unit 2207.

When the safing data is received as a response of the safing data request from the user information terminal 3 through the transmitting/receiving unit 2207, the safing data is any one of data updated by the service provider server 1 and data generated by the mobile information terminal 2 and backed up in the user information terminal 3.

The distribution signature verifying key verifying unit 2205 uses the terminal certification c_vkt or a service provider certification c_vks (see FIG. 5) included in the received safing data to verify that the distribution signature verifying key vkt or vks included in the safing data is correct.

The data safety checking unit 2206 uses the distribution signature given to the safing data the distribution signature verifying key of which is verified to check that the safing data is correct data which is not altered and to determine whether the safing data is data generated by the mobile information terminal 2 or data generated by the service provider server 1. Furthermore, the data safety checking unit 2206 determines whether the delivery data included in the safing data may be stored in the delivery data memory 2202 or not. When it is determined that the delivery data can be stored, the delivery data is stored in the delivery data memory 2202. If the contents data included in the safing data is encrypted, the contents data is decrypted by the contents decrypting key and then stored.

### User Information Terminal

The user information terminal 3 has a transmitting/receiving unit 2301 for exchanging data with the mobile information terminal 2. The safing data storing unit 301 has a safing data memory 2302 for storing the received safing data.

The safing data updating determining unit 302 has an updating necessity/unnecessity determining unit 2303, an updating request generating unit 2304, and a transmitting/receiving unit 2305.

When the updating necessity/unnecessity determining unit 2303 receives the safing data request from the mobile information terminal 2 by the transmitting/receiving unit 2301, the updating necessity/unnecessity determining unit 2303 compares distribution control information included in the backup safing data stored in the safing data memory 2302 with the terminal identification information IDt or the holder identification information IDu included in the received safing data request to determine whether updating of the backup safing data is necessary or not.

When it is determined by the updating necessity/unnecessity determining unit 2303 that the updating is not necessary, the backup safing data is directly transmitted to the mobile information terminal 2 through the transmitting/receiving unit 2301. When it is determined by the updating necessity/unnecessity determining unit 2303 that the updating is necessary, the updating request generating unit 2304 generates an updating request including backup safing data and safing data request and transmits the updating request to the service provider server 1 through the transmitting/receiving unit 2305.

When the updated safing data is received by the transmitting/receiving unit 2305 from the service provider server 1 as a response to the updating request, the updated safing data is transmitted to the mobile information terminal 2 through the transmitting/receivingunit2301. In the mobile information terminal 2 which receives the updated safing data, as described above, after the legality and the safety of the updated safing data are confirmed by the distribution signature verifying key verifying unit 2205 and the data safety checking unit 2206, the updated safing data is stored in the delivery data memory 2202.

### Service Provider Server

The contents/distribution control information storing unit 101 includes a contents memory 2101 for storing contents data such as digital contents or an electronic ticket to be distributed to a service user and a distribution control information memory 2102 for storing distribution control information corresponding to each of the contents data. As described above, depending on contents data in the contents memory 2101, the contents may be updated by an external contents processing system 2401.

The delivery data managing unit 102 has a delivery data generating unit 2103 for generating delivery data from contents data stored in the contents memory 2101 and distribution control information corresponding to the contents data, and a delivery data delivering unit 2104 for delivering delivery data to the mobile information terminal 2.

The server unique information storing unit 103, as shown in FIG. 5, stores identification information IDs of the service provider, a distribution signature creating key sks for creating a digital signature to be given to information distributed between the mobile information terminal 2 ,the user information terminal 3 and the service provider server 1, a distribution signature verifying key vks for verifying the given digital signature, and a service provider certification c_vks serving as a digital certification for the distribution signature verifying key.

The safing data updating unit 104 has a transmitting/receiving unit 2105, a distribution signature verifying key verifying unit 2106, an updating possibility/impossibility determining unit 2107, a contents encrypting key verifying unit 2108, and a safing data updating unit 2109.

When the transmitting/receiving unit 2105 receives an updating request from the user information terminal 3, the distribution signature verifying key verifying unit 2106 uses the terminal certification c_vkt included in the updating request to verify that the distribution signature verifying key vkt included in the updating request is correct. Subsequently, the updating possibility/impossibility determining unit 2107 uses the verified distribution signature verifying key to verify that the safing data included in the updating request is correct information which is not altered. Furthermore, in an external determining system 2402, with reference to an updating requirement determined by the service provider, the possibility/impossibility of updating of the safing data included in the updating request is determined. When the updating is possible, the contents encrypting key verifying unit 2108 uses the contents encrypting key certification c_ekincluded in the updating request to verify that the contents encrypting key ek included in the updating request is correct.

When the legality of the contents encrypting key ek is verified, the safing data updating unit 2109 acquires corresponding delivery data from the delivery data generating unit 2103 with reference to the safing data included in the updating request, and creates updated safing data by using the service provider identification information IDs, the distribution signature creating key sks, the distribution signature verifying key vks, and the service provider certification c_vks which are stored in the server unique information storing unit 103. In this case, contents data is encrypted by using the contents encrypting key ek which is confirmed to be correct, so that the updated safing data may be created. The updated safing data obtained as described above is returned to the user information terminal 3 through the transmitting/receiving unit 2105 as a response of the updating request.

### (3) Operation

In a digital information distribution control system according to the present invention, a system manager performs the following operations to the service provider:
• issuance and allocation of different pieces service provider identification information to respective service provider servers; and
• issuance of a service provider certification.

The service provider manages the issued service provider identification information, the service provider certification, a distribution signature creating key for creating a digital signature for certificating that the data is formed by the service provider herself/himself, and a distribution signature verifying key corresponding to the distribution signature creating key. In particular, the service provider safely manages the distribution signature creating key such that the distribution signature creating key is prevented from being known. In this case, the creation of the distribution signature creating key and the distribution signature verifying key may be performed by the service provider. In this case, the system manager may issue a service provider certification to the distribution signature verifying key presented by the service provider.

The system manager performs the following operations to the mobile information terminal 2 held by the service user:
• allocation of different pieces of terminal identification information to respective mobile information terminals and transfer of the pieces of terminal identification information to the mobile information terminals;
• allocation of different pieces of holder identification information to respective service users and transfer of the pieces of holder identification information to the mobile information terminals;
• creation of a distribution signature creating key and a distribution signature verifying key corresponding to the distribution signature creating key and transfer of the keys to the mobile information terminals;
• creation of a terminal certification and transfer the terminal certification to the mobile information terminals;
• transfer of a contents encrypting key to the mobile information terminals; and
• creation of a content decrypting key corresponding to the contents encrypting key and transfer of the content decrypting key to the mobile information terminals.

In particular, the distribution signature creating key and the contents decrypting key are stored in a tamper-resistant storage in a mobile information terminal and make it difficult to acquire the distribution signature creating key and the contents decrypting key by a malicious user. In this case, the contents encrypting key may be created and issued by the system manager and then transferred to the mobile information terminal or the contents encrypting key created by the service user and presented to the system manager may be transferred to the mobile information terminal.

The contents encrypting key/contents decrypting key constitute a pair of public key encryption type encrypting/decrypting keys. Information encrypted by the contents encrypting key can be decrypted by only the corresponding contents decrypting key. It is assumed that it is sufficiently difficult to create the contents decrypting key from the contents encrypting key unless a falling-door function for creating the contents decrypting key from the contents encrypting key. It is assumed that the falling-door function is sufficiently safely managed by the system manager.

It is assumed that the terminal unique information storing unit 202 of the mobile information terminal 2 stores the terminal unique information shown in FIG. 4 and that the server unique information storing unit 103 of the service provider server 1 stores the server unique information shown in FIG. 5. Concrete examples of a data delivering operation, a backup operation, and a restoration operation according to the embodiment will be described below.

### Data Delivery

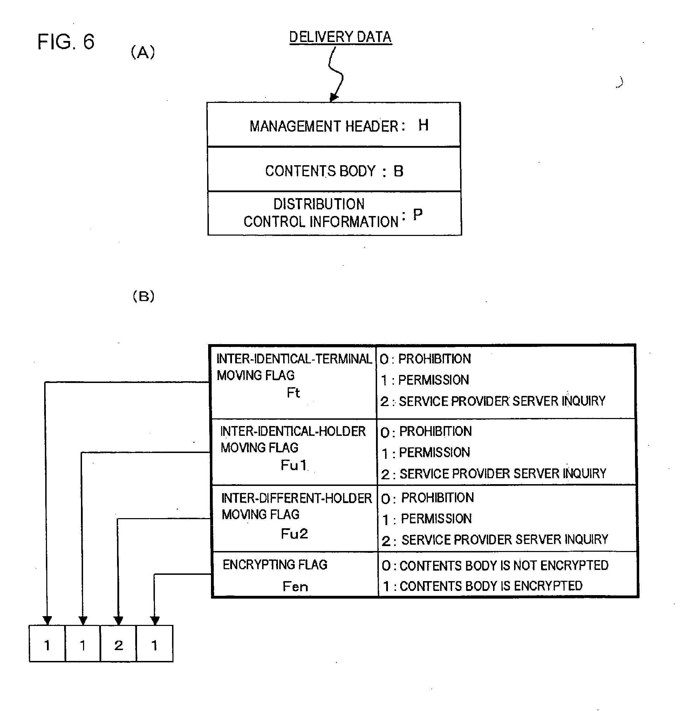

FIG. 6(A) is a pattern diagram showing an example of the configuration of delivery data created by the delivery data generating unit 2103, and FIG. 6 (B) is a pattern diagram showing a description of the distribution control information of the delivery data.

As shown in FIG. 6(A), the delivery data is constituted by a management header (H), a contents body (B), and distribution control information (P). The management header (H) is information for respectively managing contents data delivered to the mobile information terminal 2, and includes a service provider name, the serial number of contents data, and the like. The contents body (B) is contents data itself such as digital contents delivered to the mobile information terminal 2 and an electronic ticket.

The distribution control information (P) is information for controlling distribution of the delivery data delivered to the mobile information terminal 2. For example, it is assumed that data is transferred and stored from an information terminal in which the data including the distribution control information is stored to a backup information terminal. When the backup data is restored from the back up information terminal to a certain information terminal, transfer permission/server inquiry/transfer prohibition are determined based on the coincidence between the information terminal which requests restoration and the information terminal represented by the backup data and a condition represented by the distribution control information included in the backed-up data. The following control can be performed:
For example,
• "when the terminal identification information included in the backed-up data coincides with terminal identification information held by an information terminal at a restoration destination, restoration is permitted",
• "when holder identification information included in the backed-up data does not coincide with holder identification information held by the information terminal at the restoration destination, inquiry is performed at the service provider server 1, and, thereafter, restoration is permitted",
• "when terminal identification information included in the backed-up data does not coincide with the terminal identification information held by the information terminal at the restoration destination, restoration is prohibited".

As shown in FIG. 6(B), distribution control information described by four flags are shown as an example. The first flag is an inter-identical-terminal moving flag Ft, and has three values of prohibition/permission/service provider server inquiry. A next flag is an inter-identical-holder moving flag Ful, and has three values of prohibition/permission/service provider server inquiry. Another next flag is an inter-different-holder moving flag Fu2 and has three values of prohibition/permission/service provider server inquiry. Still another next flag is an encrypting flag Fen, and has two values of inexecution/execution of encryption of the contents body.

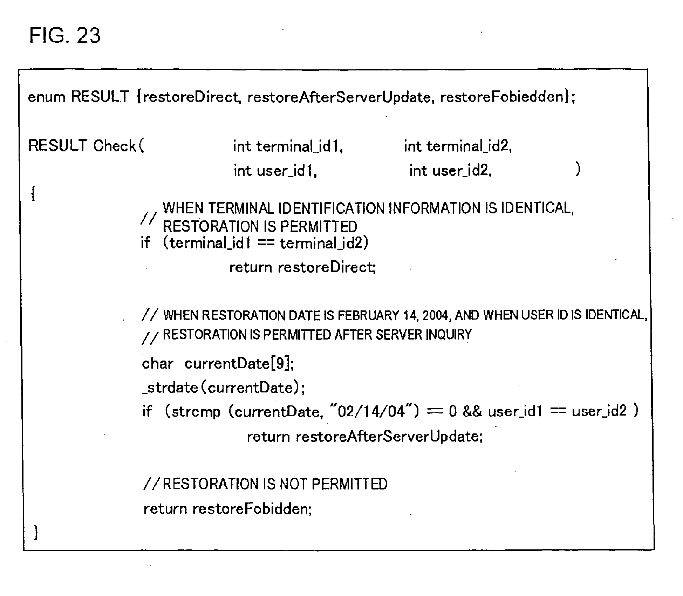

The example shown in FIG. 6(B) is an example of the distribution control information. The order of each flag may be different. Terminal identification information and holder identification information are fixedly buried in the distribution control information, so that coincidence/incoincidence between the buried terminal identification information or the buried holder identification information and the terminal identification information or the holder identification information of the mobile information terminal 2 which requires transfer of safing data may be described as a condition. Furthermore, when the terminal identification information or the holder identification information is described as a number, the sizes of the numbers may be used as conditions. Alternatively, as will be described later, the distribution control information (P) may be procedurally described by a program (see FIG. 23).

A management header and a contents body of the delivery data are stored in the contents memory 2101, and the distribution control information is stored in the distribution control information memory 2102.

The delivery data created by the delivery data generating unit 2103 is delivered from the delivery data delivering unit 2104 to the mobile information terminal 2 . In the mobile information terminal 2, the delivery data is received by the delivery data receiving unit 2201 and stored in the delivery data memory 2202. The stored delivery data is the same as the delivery data generated by the delivery data generating unit 2103 and includes information shown in FIGS. 6(A) and 6(B) .

In this case, when the Internet or a public network is used in communication between the delivery data delivering unit 2104 and the delivery data receiving unit 2201, encrypted communication to prevent contents data included in the delivery data from being intercepted on a communication pathway is desirably performed. The encrypted communication can be realized by a generally well-known technique such as SSL (Secure Socket Layer) encrypted communication. In order to protect the delivery data delivered to the mobile information terminal 2 from plagiarism by a malicious user, it is important to prevent the delivery data memory 2202 from being accessed by a system except for the system according to the present invention, or it is important that the delivery data memory 2202 is substantially prevented by encryption from being accessed.

### Backup

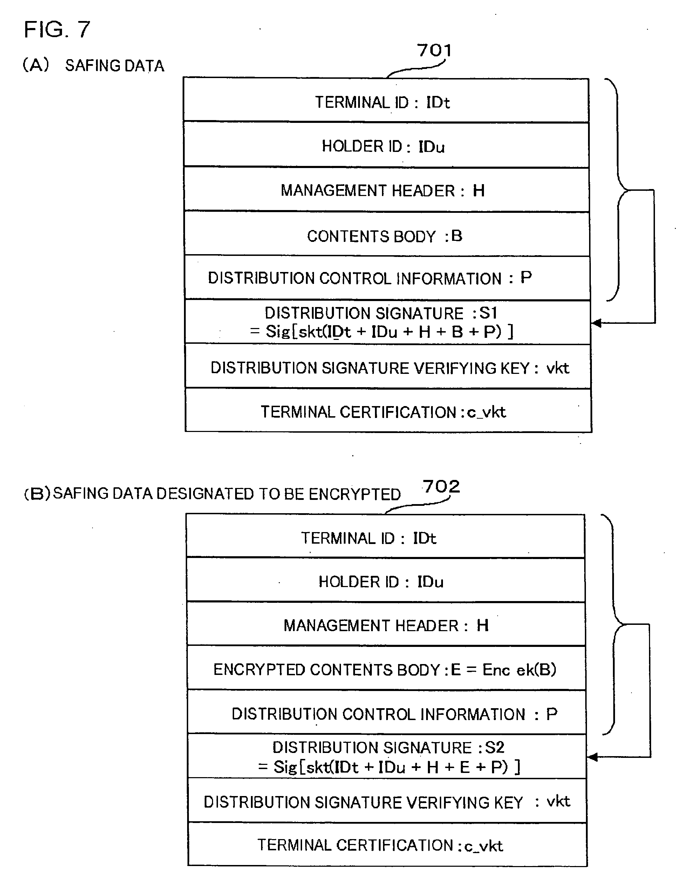

FIG. 7(A) is a pattern diagram showing a configuration of a backup safing data generated by the safing data generating unit 2203 and designated such that the contents body is not encrypted in transmission, and FIG. 7B is a pattern diagram showing a configuration of a backup safing data generated by the safing data generating unit 2203 and designated such that the contents body is encrypted in transmission.

Safing data 701 shown in FIG. 7(A) includes the terminal identification information (IDt), the holder identification information (IDu), the management header (H) included in the delivery data, a contents body (B), the distribution control information (P), the distribution signature (S1), the distribution signature verifying key (vkt), and the terminal certification (c_vkt) which are stored in the mobile information terminal 2. The distribution signature (S1) is a digital signature: S1 = Sig[skt (IDt+IDu+H+B+p)] created by using the distribution signature creating key (skt) stored in the mobile information terminal 2 in data obtained by combining the terminal identification information (IDt), the holder identification information (IDu), the management header (H), the contents body (B), and the distribution control information (P).

Safing data 702 shown in FIG. 7(B) is safing data obtained when it is designated that the contents body is encrypted in transmission. The safing data 702 includes the terminal identification information (IDt), the holder identification information (IDu), the management header (H) included in the delivery data, the encrypted contents body (E) obtained by encrypting the contents body (B), the distribution control information (P), a distribution signature (S2), the distribution signature verifying key (vkt), and the terminal certification (c__vkt) which are stored in the mobile information terminal 2. In this case, the encrypted contents body (E) is created by using the contents encrypting key (ek) stored in the mobile information terminal 2. The distribution signature (S2) is a digital signature created by using the distribution signature creating key (skt) stored in the mobile information terminal 2 in data obtained by combining the terminal identification information (IDt), the holder identification information (IDu), the management header (H), the encrypted contents body (E), and the distribution control information (P).: S2 = Sig[skt(IDt+IDu+H+E+P)]

The safing data 701 or 702 generated as described above is transmitted to the user information terminal 3 through the transmitting/receiving unit 2207.

In the user information terminal 3, the transmitting/receiving unit 2301 receives backup safing data from the mobile information terminal 2 and stores the backup safing data in the safing data memory 2302. The data stored in the safing data memory 2302 may include at least the safing data shown in FIGS. 7A and 7B. The safing data memory 2302 may store information except for the safing data. For example, when storage date information is also stored in the safing data memory 2302, the safing data can be identified as safing data lastly transferred.

### Restoration

An operation of restoring safing data stored in the user information terminal 3 to the mobile information terminal 2 will be described below.

### 1) Safing Data Request

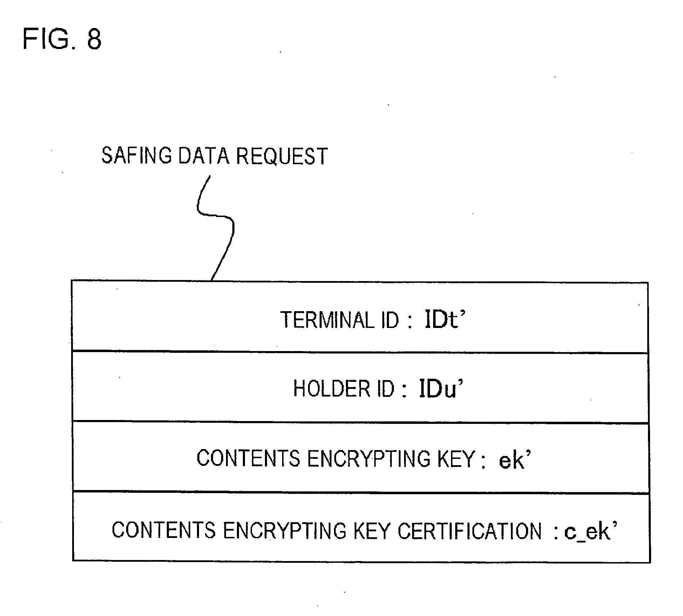

FIG. 8 is a pattern diagram showing a configuration of a safing data request generated by the safing data request generating unit 2204. In FIG. 8, the safing data request includes terminal identification information (IDt'), holder identification information (IDu'), contents encrypting key (ek'), and contents encrypting key certification (c_ek') . In this case, symbol "'" (dash) is added to discriminate terminal unique information of a mobile information terminal for generating the safing data request from terminal unique information of a mobile information terminal which creates safing data in advance. That is, when the mobile information terminal is identical, the pieces of terminal unique information completely coincide with each other. However, when a different mobile information terminal is legally or illegally used to generate a safing data request, the pieces of terminal unique information do not coincide with each other.

The safing data request may include, in addition to the information shown in FIG. 8, information for identifying safing data to be requested. When the safing data request does not include the information for identifying the safing data, it is understood that all safing data stored in the user information terminal 3 are requested. Alternatively, when the user information terminal 3 has a user interface, a user is caused to operate the user interface, so that safing data to be transferred to the mobile information terminal 2 may be selected.

The safing data request generated by the safing data request generating unit 2204 is transmitted from the mobile information terminal 2 to the user information terminal 3 through the transmitting/receiving unit 2207. The user information terminal 3 receives the safing data request through the transmitting/receiving unit 2301 and transfers the safing data request to the updating necessity/unnecessity determining unit 2303.

### 2) Updating Necessity/unnecessity Determination

The updating necessity/unnecessity determining unit 2303 reads the backup safing data stored in the safing data memory 2302 and compares distribution control information included in the backup safing data with terminal identification information and holder identification information which are included in the safing data request. Depending on the comparison result, it is determined whether the backup safing data is directly transferred to the mobile information terminal 2 or the service provider server 1 is requested to perform transfer determination and updating of the safing data.

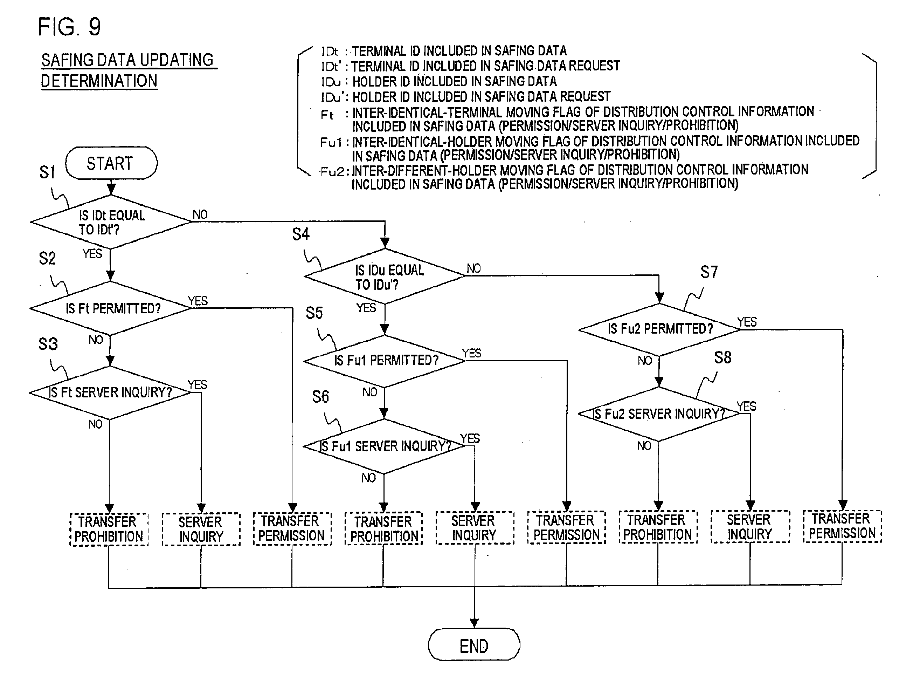

FIG. 9 is a flow chart showing an example of a safing data updating determining operation of the updating necessity/unnecessity determining unit 2303. Here, ID information consists of terminal identification information IDt and holder identification information IDu and the safing data includes the distribution control information shown in FIG. 6(B). The same operation is performed when the ID information consists of a group ID, a family ID, and the like.

In FIG. 9, the updating necessity/unnecessity determining unit 2303 compares the terminal identification information (IDt) included in the backup safing data with the terminal identification information (IDt') included in the safing data request (step S1).

When IDt = IDt' is satisfied (YES in step S1), subsequently, it is determined whether the value of the inter-identical-terminal moving flag (Ft) of the distribution control information included in the backup safing data is "1 : permission" or not (step S2). When Ft = 1 (inter-identical-terminal moving permission) is satisfied (YES in step S2), the backup safing data is transferred to the mobile information terminal 2 through the transmitting/receiving unit 2301 (transfer permission).

When Ft ≠ 1 is satisfied (NO in step S2), the updating necessity/unnecessity determining unit 2303 further determines whether the value of inter-identical-terminal moving flag (Ft) of the distribution control information included in the backup safing data is "2 : service provider server inquiry" or not (step S3). When Ft = 2 (YES in step S3), the updating necessity/unnecessity determining unit 2303 transfers the backup safing data to the updating request generating unit 2304 to start a server inquiry process (to be described later). When Ft≠ 2 (NO in step S3), Ft = 0 (transfer prohibition) is determined, and restoration in the mobile information terminal 2 is prohibited.

On the other hand, when IDt ≠ IDt' is satisfied (NO in step S1), the updating necessity/unnecessity determining unit 2303 compares the holder identification information (IDu) included in the backup safing data and the holder identification information (IDu') included in the safing data request (step S4).

When IDu = IDu' is satisfied (YES in step S4), subsequently, it is determined whether the value of the inter-identical-holder moving flag (Fu1) of the distribution control information included in the backup safing data is "1 : permission" or not (step S5). When Fu1 = 1 (inter-identical-holder moving permission) is satisfied (YES in step S5), the backup safing data is directly transferred to the mobile information terminal 2 through the transmitting/receiving unit 2301 (transfer permission).

When Fu1≠ 1 is satisfied (NO in step S5), the updating necessity/unnecessity determining unit 2303 further determines whether the value of inter-identical-holder moving flag (Fu1) of the distribution control information included in the backup safing data is "2 : service provider server inquiry" or not (step S6). When Fu1 = 2 (YES in step S6), the updating necessity/unnecessity determining unit 2303 transfers the backup safing data to the updating request generating unit 2304 to start a server inquiry process (to be described later) . When Fu1 # 2 (NO in step S6), Fu1 = 0 (transfer prohibition) is determined, and restoration in the mobile information terminal 2 is prohibited.

When IDu≠ IDu' is satisfied (NO in step S4), the updating necessity/unnecessity determining unit 2303 determines whether the value of the inter-different-holder moving flag (Fu2) of the distribution control information included in the backup safing data is "1 : permission" or not (step S7). When Fu2 = 1 is satisfied (inter-different-user moving permission) (YES in step S7), the backup safing data is directly transferred to the mobile information terminal 2 through the transmitting/receiving unit 2301(transfer permission).

When Fu2 ≠ 1 is satisfied (NO in step S7), the updating necessity/unnecessity determining unit 2303 determines whether the value of inter-different-user moving flag (Fu2) is "2 : service provider server inquiry" or not (step S8) . When Fu2 = 2 is satisfied (YES in step S8), the updating necessity/unnecessity determining unit 2303 transfers the backup safing data to the updating request generating unit 2304 to start a server inquiry process (to be described later) . When Fu2≠2 is satisfied (NO in step S8), Fu2 = 0 (transfer prohibition) is determined, and restoration in the mobile information terminal 2 is prohibited.

In this manner, it is determined whether the backup safing data is transferred to the mobile information terminal 2 (transfer permission), the service provider server is requested to perform transfer determination and updating of the safing data (server inquiry), or the safing data is not transferred (transferprohibition) . However, the determining method is not limited to the above method. Another method may be used when the transfer permission/server inquiry/transfer prohibition can be determined by using information recorded in the distribution control information and the information included in the safing data request. The distribution control information may be procedurally described (to be described later).

### 3) Server Inquiry

When the updating necessity/unnecessity determining unit 2303 determines "server inquiry", the updating request generating unit 2304 generates an updating request.

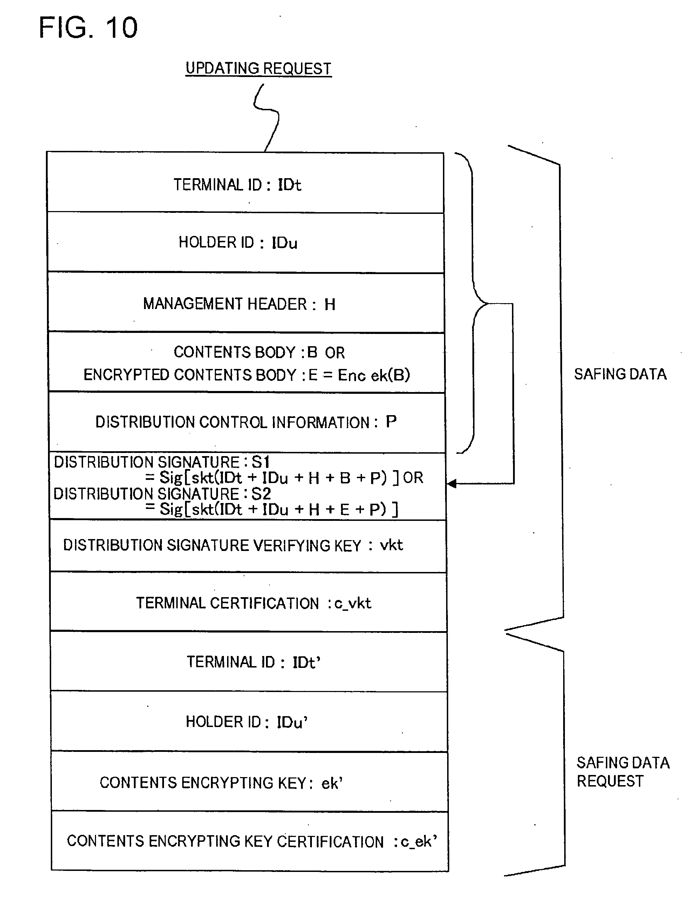

FIG. 10 is a pattern view showing a configuration of the updating request. The updating request includes at least backup safing data and a safing data request. In the updating request shown in FIG. 10, a case of an unencrypted contents body (B) and a case of an encrypted contents body (E) are described. The transmitting/receiving unit 2305 transmits the generated updating request to the service provider server 1.

When the service provider server 1 receives the updating request from the user information terminal 3, the distribution signature verifying key verifying unit 2106 verifies that the distribution signature verifying key (vkt) is a legal distribution signature verifying key allocated by a system manager based on the terminal certification (c_vkt) included in the updating request. However, it is assumed that the distribution signature verifying key verifying unit 2106 holds information required to verify the legality of the terminal certification.

When the legality of the distribution signature verifying key (vkt) is denied, the updating of the safing data by the server inquiry fails, and a process of transferring the safing data to the mobile information terminal 2 (restoration) is stopped.

When the legality of the distribution signature verifying key (vkt) is verified, the updating possibility/impossibility determining unit 2107 uses the distribution signature verifying key (vkt) included in the updating request to verify, based on the distribution signature S1 or the distribution signature S2, that the terminal identification information (IDt), the holder identification information (IDu), the management header (H), the contents body (B) or the encrypted contents body (E), and the distribution control information (P) are correct pieces of information which are not altered. Furthermore, based on the terminal identification information (IDt and IDt'), the holder identification information (IDu and IDu'), and the management header (H), the updating possibility/impossibility determining unit 2107 determines whether the contents data included in the backup safing data is transferred to the mobile information terminal of the terminal identification information IDt' and restored or not , in corporation with the external determining system 2402. When the legality of the backup safing data and the mobile information terminal of a transfer destination are confirmed, it is determined that the backup safing data can be updated.

When it is determined that the backup safing data can be updated, the contents encrypting key verifying unit 2108; based on the contents encrypting key certification (c_ek') included in the updating request, verifies that the contents encrypting key (ek') is a contents encrypting key correctly allocated by the system manager. It is assumed that the contents encrypting key verifying unit 2108 holds information required to verify the legality of the contents encrypting key certification. When the verification of the contents encrypting key (ek') fails, updating of the safing data by server inquiry fails, and a process of transferring the safing data to the mobile information terminal 2 is stopped.

When the verification of the contents encrypting key (ek') is successful, the safing data updating unit 2109 acquires delivery data from the delivery data generating unit 2103 to generate updated safing data.

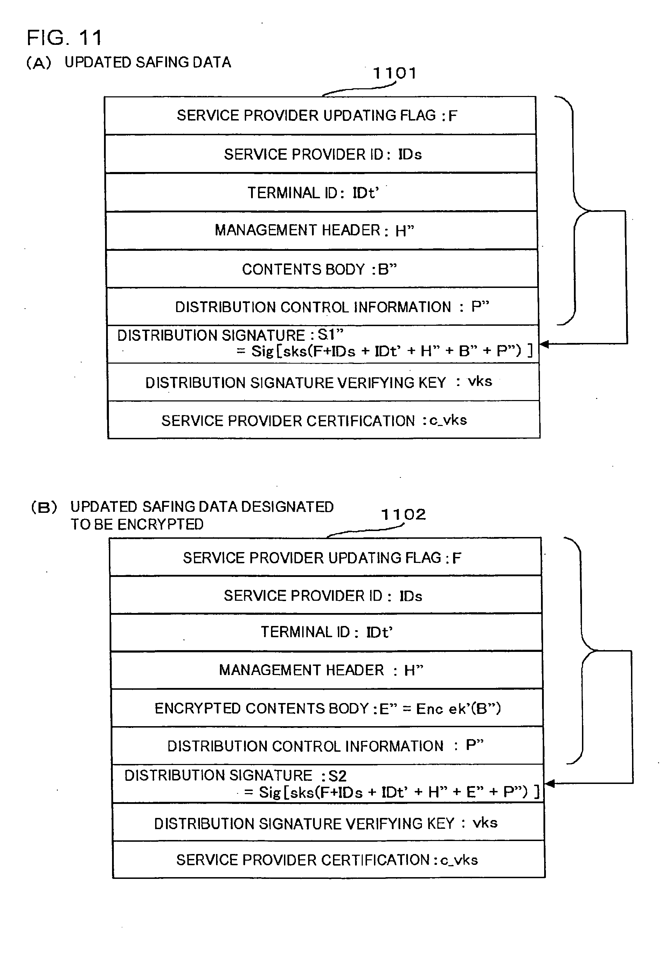

FIG. 11A is a pattern diagram showing a configuration of updated safing data generated by the safing data updating unit 2109 and designated such that a contents body is not encrypted in transmission, and FIG. 11B is a pattern diagram showing a configuration of updated safing data generated by the safing data updating unit 2109 and designated such that the contents body is encrypted in transmission.

Safing data 1101 shown in FIG. 11A includes a service provider updating flag (F) representing that the data is safing data updated by the service provider, service provider identification information (IDs) stored in the service provider server, delivery data (H", B", and P") generated by the delivery data generating unit 2103 again, the distribution signature verifying key (vks), the service provider certification (c_vks), and a distribution signature (S1").

The distribution signature (S1") is a digital signature created by using the distribution signature creating key (sks) stored in the server unique information storing unit 103. More specifically, the distribution signature (S1"): S1" = Sig [sks (F+ IDs+IDt' +H"+B"+P")] is created by using the distribution signature creating key (sks) to data obtained by combining the management header (H"), the contents body (B"), and the distribution control information (P") which are included in the delivery data generated by the delivery data generating unit 2103 again, the terminal identification information (IDt') included in the updating request, the service provider updating flag (F), and the service provider identification information (IDs).

Safing data 1102 shown in FIG. 11B includes a service provider updating flag (F) representing that the data is safing data updated by the service provider, service provider identification information (IDs) stored in the service provider server, delivery data (H", E", and P") generated by the delivery data generating unit 2103 again, the distribution signature verifying key (vks), the service provider certification (c_vks), and a distribution signature (S2").

The distribution signature (S2") is a digital signature created by using the distribution signature creating key (sks) stored in the server unique information storing unit 103. More specifically, the distribution signature (S2"): S2" = Sig[sks(F+IDs+IDt'+H"+E"+P")] is created by using the distribution signature creating key (sks) to data obtained by combining the management header (H"), an encrypted contents body (E") obtained by encrypting the contents body (B"), and the distribution control information (P") which are included in the delivery data generated by the delivery data generating unit 2103 again, the terminal identification information (IDt') included in the updating request, the service provider updating flag (F), and the service provider identification information (IDs). The encrypted contents body is included in the updating request and created by using a verified contents encrypting key (ek').

In this case, symbol """ (two dash) is added to discriminate the header, the contents body, and the information from the management header (H), the contents body (B)/encrypted contents body (E), and the distribution control information (P) included in the updating request. As described above, the contents data stored in the contents memory 2101 may be updated by the external contents processing system 2401. This means that the contents data may be different from the delivery data delivered from the service provider server 1 to the mobile information terminal 2. As a matter of course, the delivery data is not updated by the external contents processing system 2401, and the same delivery data may be used.

The safing data updated as described above is transmitted to the user information terminal 3 through the transmitting/receiving unit 2105. When the user information terminal 3 receives the updated safing data, the user information terminal 3 transmits the updated safing data to the mobile information terminal 2 as restoration safing data.

### 4) Safety Check and Restoration

The transmitting/receiving unit 2207 in the mobile information terminal 2 receives the updated safing data from the user information terminal 3. The received safing data is the safing data 701 or 702 as shown in FIG. 7A and 7B when the safing data is not updated by a service provider server 1. When the safing data is updated by the service provider server 1, the safing data is the safing data 1101 or 1102 as shown in FIGS. 11A and 11B.

The distribution signature verifying key verifying unit 2205 verifies, based on the terminal certification (c_vkt) included in the received safing data, that the distribution signature verifying key (vkt) is a distribution signature verifying key correctly allocated by a system manager. Alternatively, based on the service provider certification (c_vks) included in the received safing data, the distribution signature verifying key verifying unit 2205 verifies that the distribution signature verifying key (vks) is a distribution signature verifying key correctly allocated by the system manager. It is assumed that the distribution signature verifying key verifying unit 2205 holds information required to verify the legality of the terminal certification and the service provider certification.

In the data safety checking unit 2206, by using the distribution signature verifying key (vkt or vks) verified by the distribution signature verifying key verifying unit 2205, based on the distribution signature (S1/S2 or S1"/S2") included in the safing data, it is confirmed that the received safing data is not altered. When alteration is detected, the process is stopped. When the safing data is not altered, data safety check (to be described below) is performed.

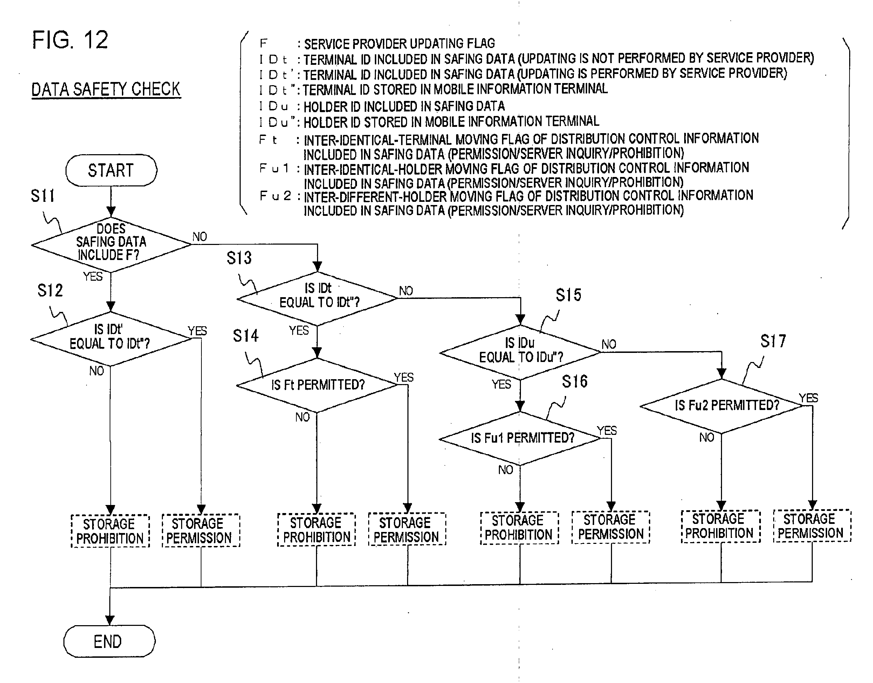

FIG. 12 is a flow chart showing an example of a data safety checking operation in the data safety checking unit 2206. FIG. 12 shows a case in which ID information consists of the terminal identification information IDt and the holder identification information IDu and the safing data includes the distribution control information shown in FIG. 6B. The same operation is performed when the ID information consists of a group ID, a family ID, and the like.

In FIG. 12, the data safety checking unit 2206 determines whether the safing data the legality of which is confirmed includes the service provider updating flag (F) or not (step S11) . When the safing data includes the service provider updating flag (F) (YES in step S11), it is determined that updating is performed by the service provider server 1, and the terminal identification information (IDt') included in the safingdata and the terminal identification information (IDt") stored in the mobile information terminal 2 are compared with each other (step S12).

When IDt' = IDt" is satisfied (YES in step S12), the identical mobile information terminal is recognized. For this reason, the delivery data (H", B", and P") included in the safing data the legality of which is confirmed are restored and stored in the delivery data memory 2202 (storage permission) . When the safing data the legality of which is confirmed includes the encrypted contents body (E"), the encrypted contents body is decrypted by using the contents decrypting key (dk") to restore the delivery data consisting of the management header (H"), the contents body (B"), and the distribution control information (P"), and the delivery data is stored in the delivery data memory 2202. In this case, in order to correctly decrypt the encrypted contents body, the contents decrypting key (dk') and the contents decrypting key (dk") necessarily coincide with each other. The coincidence of the contents decrypting keys can be realized by the following method. That is, the service usermanages the contents encrypting key, the systemmanager indirectly manages the contents decrypting key generated and stored in the mobile information terminal, or the service provider devises the distribution control information included in the delivery data.

When IDt' # IDt" is satisfied (NO in step S12), storage in the delivery data memory 2202 is prohibited (storage prohibition).

When the safing data does not include the service provider updating flag (F) (NO in step S11), it is determined that updating by the service provider server 1 is not performed, and the terminal identification information (IDt) included in the safing data is compared with the terminal identification information (IDt") stored in the mobile information terminal (step S13). When IDt = IDt" is satisfied (YES in step S13), it is further determined whether the value of the inter-identical-terminal moving flag (Ft) of the distribution control information included in the safing data is "1 : permission" or not (step S14). When Ft = 1 is satisfied (YES in step S14), storage in the delivery data memory 2202 is permitted as described above (storage permission). When the safing data the legality of which is confirmed includes the encrypted contents body (E), the encrypted contents body is decrypted by using the contents decrypting key (dk) to restore the delivery data consisting of the management header (H), the contents body (B), and the distribution control information (P), and the delivery data is stored in the delivery data memory 2202. In this case, in order to correctly decrypt the encrypted contents body, the contents decrypting key (dk) and the contents decrypting key (dk") necessarily coincide with each other. The coincidence of the contents decrypting keys can be realized by the following method. That is, the service user manages the contents encrypting key, the system manager indirectly manages the contents decrypting key generated by the system manager and stored in the mobile information terminal, or the service provider devises the distribution control information included in the delivery data.

When Ft ≠ 1 is satisfied (NO in step S14), storage in the delivery data memory 2202 is prohibited (storage prohibition).

When IDt ≠ IDt" (NO in step S13), furthermore, the holder identification information (IDu) included in the safing data is compared with the holder identification information (IDu") stored in the mobile information terminal (step S15). When the IDu = IDu" is satisfied (YES in step S15), it is determined whether the value of the inter-identical-holder moving flag (Fu1) of the distribution control information included in the backup safing data is "1 : permission" or not (step S16). When Fu1 = 1 is satisfied (YES in step S16), storage in the delivery data memory 2202 is permitted as described above (storage permission) . When Fu1 ≠ 1 is satisfied (NO in step S16), storage in the delivery data memory 2202 is prohibited (storage prohibition).

When IDu ≠ IDu" is satisfied (NO in step S15), it is further determined whether the value of the inter-different-holder moving flag (Fu2) of the distribution control information included in the safing data is "1 : permission" or not (step S17). When Fu2 = 1 is satisfied (YES in step S17), storage in the delivery data memory 2202 is permitted as described above (storage permission). When Fu2≠1 is satisfied (NO in step S17), storage in the delivery data memory 2202 is prohibited (storage prohibition). In the example described above, in encryption of the contents body in the safing data generating unit 2203 and the safing data updating unit 2109 and decryption of the contents body in the data safety checking unit 2206, a contents encrypting key and a contents decrypting key of a public key encryption system are directly used. In order to solve the problem of a computing speed unique to the public key encryption system, for example, a symmetric key of a symmetric key encryption system is generated at random in encryption, and the contents body is encrypted by using the symmetric key, so that the symmetric key may be encrypted by the contents encrypting key and included in the safing data together with the encrypted contents body. In this case, in decryption, first, the symmetric key is decrypted by the contents decrypting key. The contents body can be decrypted by using the obtained symmetric key.

### Application of the System

An example of a use scene assumed by the digital information distribution control apparatus according to the embodiment will be introduced.

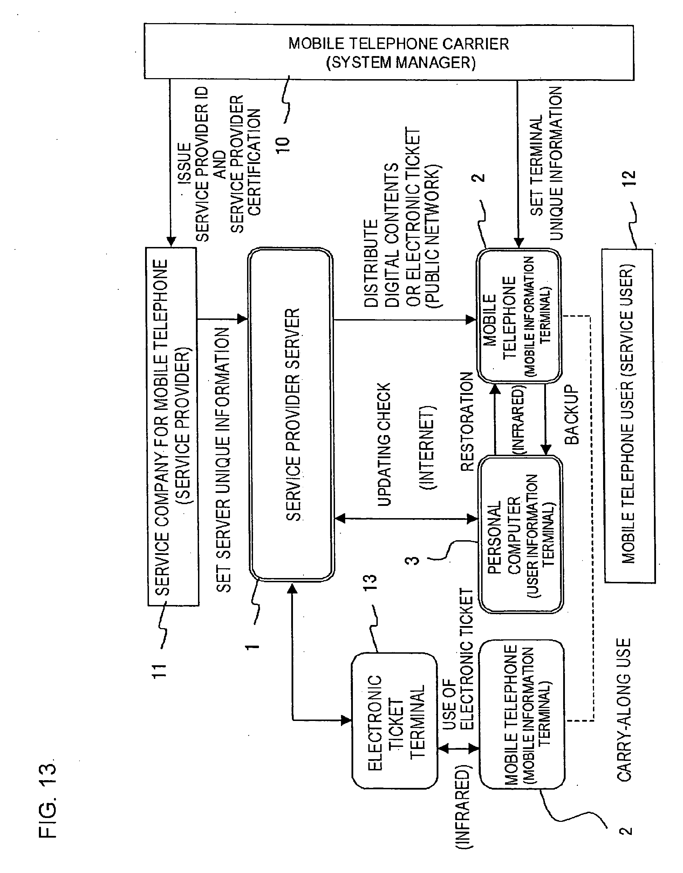

FIG. 13 is a schematic system functional diagram showing a first application of a digital information distribution control system according to a first embodiment of the present invention. In a use scene shown in FIG. 13, a mobile telephone carrier 10 serving as a system manager, a mobile telephone service company 11 serving as a service provider, and a mobile telephone user 12 serving as a service user are assumed.

The service provider server 1 delivers contents data (including an electronic ticket in this case) to a mobile telephone 2. The mobile telephone user 12 browses delivered contents on the mobile telephone 2 or goes to a place where a electronic ticket terminal 13 is installed to make it possible to use an electronic ticket in the mobile telephone 2. As described above, the mobile telephone user 12 uses infrared communication, short-distance wireless communication, or the like to back up digital contents or an electronic ticket in his/her personal computer 3 (user information terminal) and restore the digital contents or the electronic ticket in the mobile telephone 2 as needed. The backup or the restoration can secure the convenience for the user and the right protection for the service provider because the legality and the security are guaranteed as described above.

### Another Example of the System

The first embodiment of the present invention shown in FIGS. 1 and 3 can be realized by hardware. However, the first embodiment can be implemented in a computer by means of software.

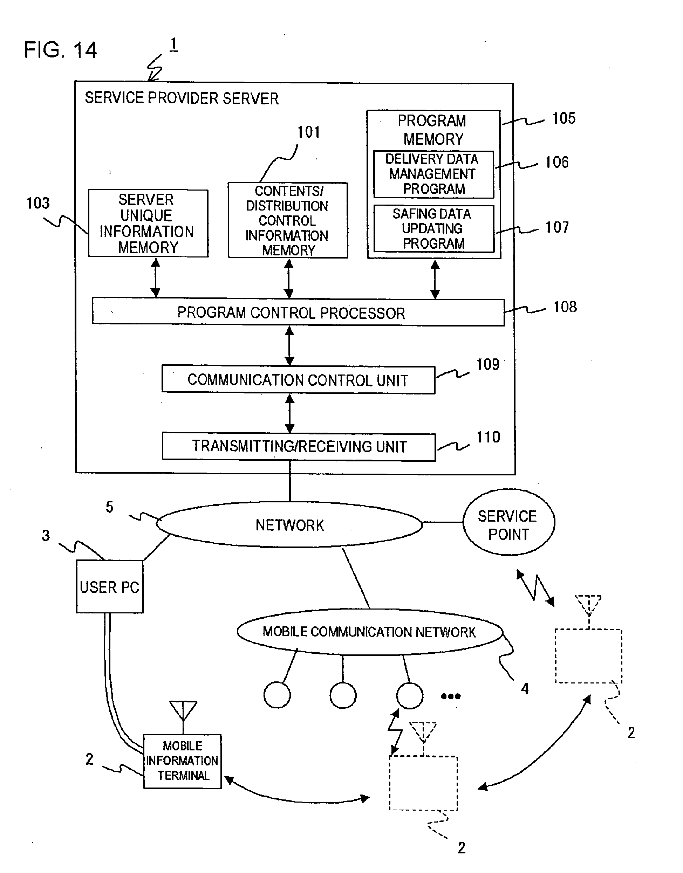

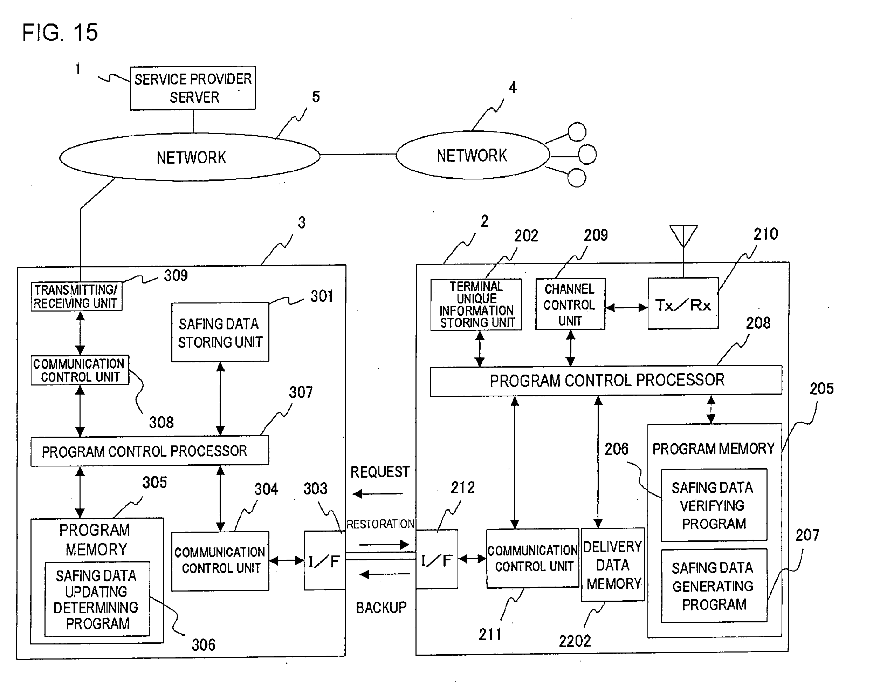

FIG. 14 is a schematic block diagram showing another example of the service provider server 1 according to the first embodiment, and FIG. 15 is a schematic block diagram showing other examples of the mobile telephone 2 and the user information terminal 3 according to the first embodiment. The same reference numerals as in the blocks shown in FIGS. 1 and 3 denote parts having the same functions in FIGS. 14 and 15, and a description thereof will not be shown.

As shown in FIG. 14, in the service provider server 1, a contents/distribution control information storing unit 101, a server unique information storing unit 103, a program memory 105, a program control processor 108, a communication control unit 109, and a transmitting/receiving unit 110 are arranged. In the program memory 105, a delivery data management program 106 realizes the same function as that of the delivery data managing unit 102 and a safing data updating program 107 realizes the same function as that of the safing data updating unit 104.

The program control processor 108 executes the programs stored in the program memory 105 to execute data distribution to the mobile information terminal 2 as shown in FIG. 2, updating of contents data by the external contents processing system 2401, receiving of an updating request, updating possibility/impossibility determination (step S05), and updating of the safing data (step S06) .

In particular, the delivery data managing unit 102 to realize data delivery and updating of the contents data and the safing data updating unit 104 to execute updating possibility/impossibility determination (step S05) and updating of the safing data (step S06) can be realized in software by executing the delivery data management program 106 and by executing the safing data updating program 107.

Actual communication such as reception of the updating request, transmission of the updated safing data, and transmission of the delivery data is executed by the communication control unit 109 and the transmitting/receiving unit 110 under the control of the program control processor 108.

As shown in FIG. 15, the mobile information terminal 2 has a terminal unique information storing unit 202, a delivery data memory 2202, a program memory 205, a program control processor 208, a channel control unit 209, a transceiver 210, a communication control unit 211, and a wired/wireless interface 212.

A safing data verifying program 206 and a safing data generating program 207 are stored in the program memory 205 and executed by the program control processor 208 to execute reception of the delivery data as shown in FIG. 2, storing/reading of the delivery data, generation of safing data (step S01), generation and transmission of a safing data request, reception of safing data from the user information terminal 3, safety check of the received safing data, and restoration of the delivery data the safety of which is confirmed.

In particular, the safing data creating unit 203 to execute the generation of safing data (step S01) and the safing data verifying unit 204 to execute the safety check (step S07) can be realized in software by executing the safing data generating program 207 and the safing data verifying program 206 .

Communication with the service provider server 1 is executed by the channel control unit 209 and the transceiver 210, and communication with the user information terminal 3 is executed by the communication : control unit 211 and the interface 212.

The user information terminal 3 has a safing data storing unit 301, a wired/wireless interface 303, a communication control unit 304, a program memory 305, a program control processor 307, a communication control unit 308, and a transmitting/receiving unit 309. A safing data updating determining program 306 stored in the program memory 305 is executed by the program control processor 307 to execute reception of backup safing data as shown in FIG. 1, storage of the backup safing data (step S02), reception of a safing data request, updating determination (step S03), generation of an updating request (step S04), and reception and transfer of updated safing data. In particular, the safing data updating determining unit 302 to execute the updating determination (step S03) can be realized in software by executing the safing data updating determining program 306 . Communication with the service provider server 1 is executed by the communication control unit 308 and the transmitting/receiving unit 309, and communication with the mobile information terminal 2 is performed by the communication control unit 304 and the interface 303.

### 2. Second Embodiment

A system which backs up the delivery data stored in the mobile information terminal 2 as safing data and restores the delivery data as needed is not limited to the configuration obtained by directly connecting the mobile information terminal 2 and the user information terminal 3 as shown in FIG. 1. The backup and restoring operations according to the present invention can be performed by a system configuration obtained by connecting the mobile information terminal 2 and the user information terminal 3 to each other through a network.

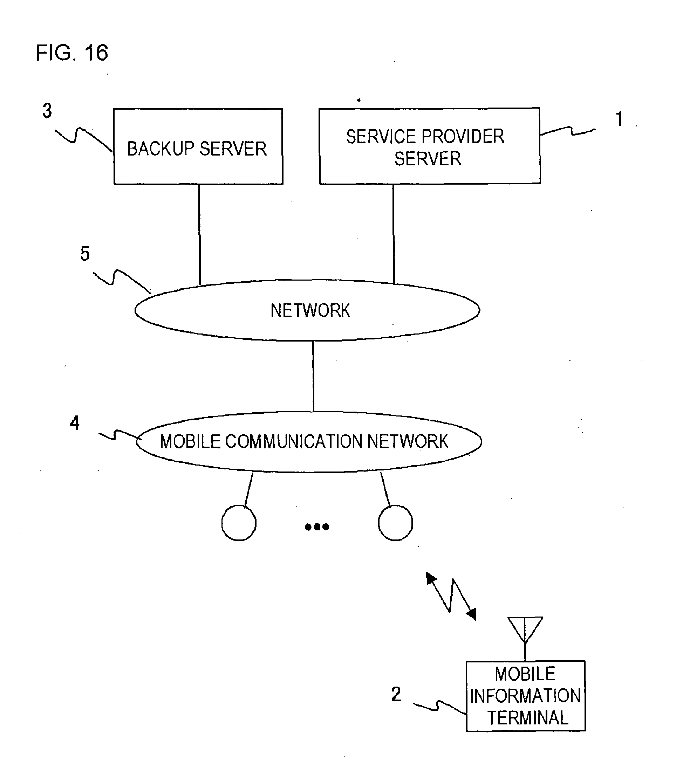

FIG. 16 is a block diagram showing a schematic functional configuration of a digital information distribution control system according to a second embodiment of the present invention. In the system according to the embodiment, a user information terminal in FIG. 1 is realized by the backup server 3 connected to the network 5. Since the basic configuration and the operation of backup server 3 are the same as those in the user information terminal 3 according to the first embodiment, a description thereof will not be shown.

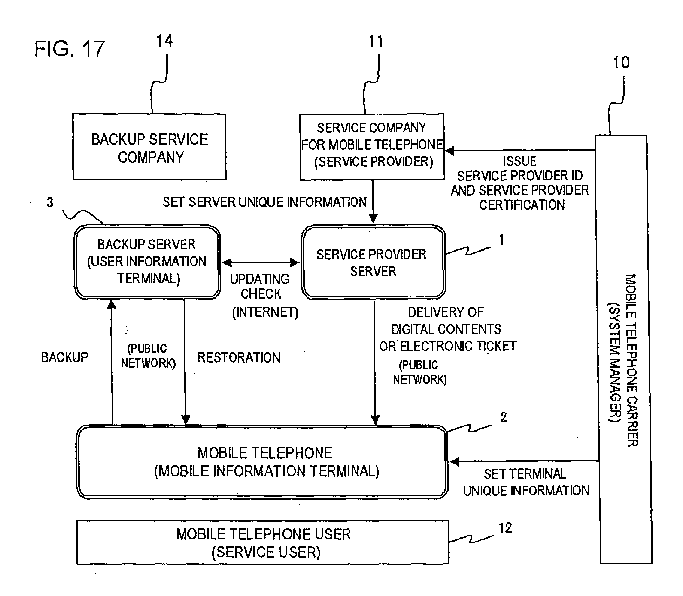

FIG. 17 is a schematic system functional diagram showing an application of the digital information distribution control system according to the second embodiment of the present invention. In a use scene shown in FIG. 17, a user information terminal is not a personal computer of the mobile telephone user 12, but the user information terminal is a backup server 3 managed by a backup service company 14. The backup and restoring operations according to the present invention is performed through a public network.

### 3. Third Embodiment

The first embodiment shown in FIGS. 1 and 3 explains the case in which the user information terminal 3 is connected to a service provider server 1 through a network 5 such as the Internet to make • it possible to update safingdata. However, the present invention is not limited to the above configuration. For example, the updating necessity/unnecessity determining function, the updating request generating function, the updating request transmitting function, and the like included in the safing data updating determining unit 302 can also be given to the mobile information terminal 2. In this case, the user information terminal 3 does not require a communicating function for connecting the user information terminal 3 to the service provider server 1.

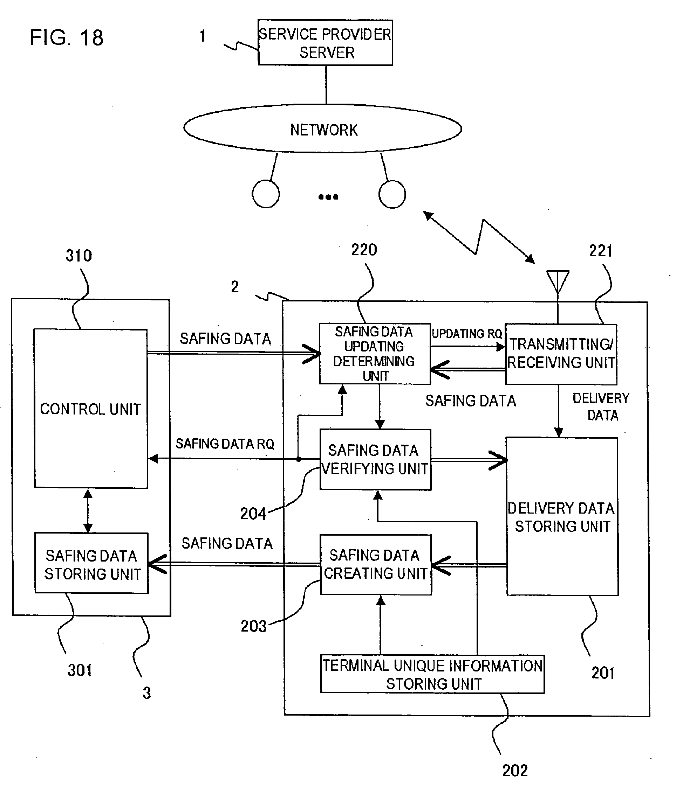

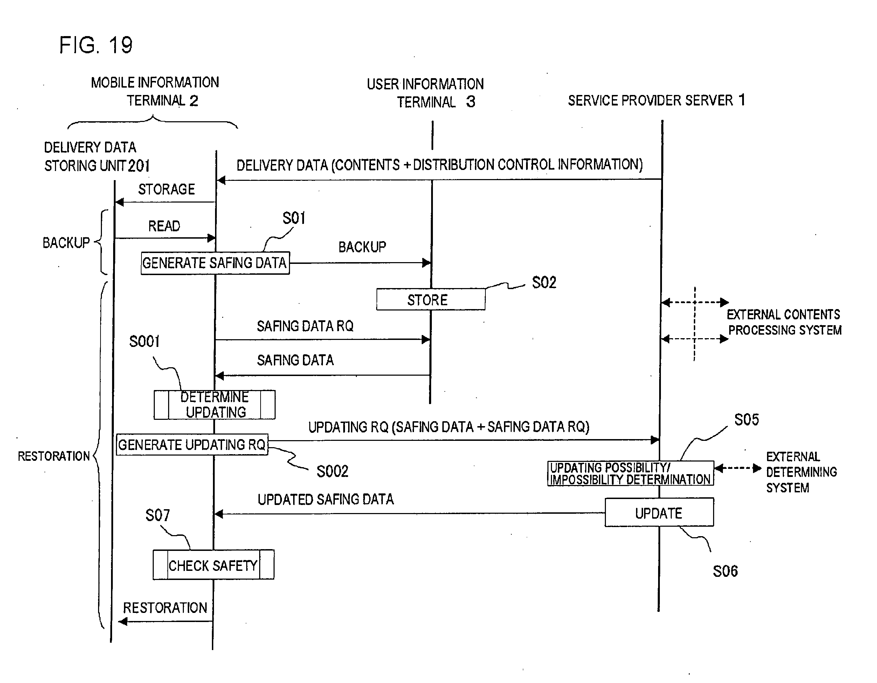

FIG. 18 is a schematic system functional diagram showing a digital information distribution control system according to a third embodiment of the present invention. The same reference numerals as in the blocks shown in FIGS. 1 and 3 denote parts having the same functions in FIG. 18, and a description thereof will not be shown. FIG. 19 is a flow chart showing an entire sequential operation of the digital information distribution control system in FIG. 18 and a schematic operation flow of terminals and a server.

As shown in FIGS. 18 and 19, a safing data updating determining unit 220 is arranged in a mobile information terminal 2 according to the embodiment, and a control unit 310 for performing general data input/output control of the safing data storing unit 301 is arranged in the user information terminal 3. Delivery data is stored in a delivery data storing unit 201 of the mobile information terminal 2, and backup safing data is created by using the delivery data and terminal unique information in a backup operation (step S01) and stored in the safing data storing unit 301 in the user information terminal 3.

A safing data request is output from the mobile information terminal 2 to the user information terminal 3 in restoration, the control unit 310 reads corresponding backup safing data from the safing data storing unit 301 and transmits the backup safing data to the safing data updating determining unit 220 of the mobile information terminal 2. The safing data updating determining unit 220 uses identification information of the safing data request, identification information of the backup safing data, and distribution control information to determine whether the backup safing data can be directly used or not , or whether inquiry at the service provider server 1 is necessary or not (step S001). More specifically, step S001 performs the same operation as in step S03 in FIG. 2. When the backup safing data can be used directly, the backup safing data is restored in the delivery data storing unit 201 through the verification (step S07).

If the inquiry is necessary, an updating request is generated from the backup safing data and the safing data request (step S002), and the updating request is transmitted to the service provider server 1 through a transmitting/receiving unit 221. When the updated safing data is returned from the service provider server 1, the updated safing data is output to the safing data verifying unit 204 and restored in the delivery data storing unit 201 through the verification (step S07).

### 4. Fourth Embodiment

As described in FIGS. 11A and 11B, a service provider updating flag (F) is set in the safing data updated by the service provider. In the first embodiment, the presence/absence of updating is determined by the updating flag F. However, this flag is used not only as the flag representing the presence/absence of updating but also as information representing an expiration-date until which the safing data can be restored.

In the fourth embodiment of the present invention, expiration-date information is added to the updated safing data in the service provider server 1. An operation of the data safety checking unit 2206 in this case is as follows.

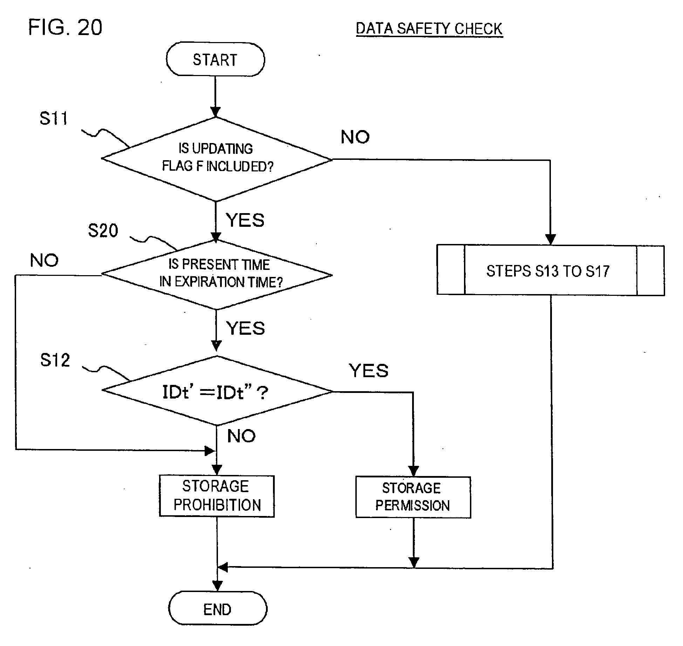

FIG. 20 is a flow chart showing an example of a data safety checking operation of a data safety checking unit 2206 when updated safing data including the expiration-data information is received. The same reference numerals as the flow chart in FIG. 12 denote the same steps in FIG. 20, and a description thereof will not be shown.

When the updating flag F included in safing data received from a user information terminal 3 includes an updating flag F (YES in step S11), the data safety checking unit 2206 reads the expiration-date information added to the updating flag F and compares the information with present-time information read from a clock in the mobile information terminal 2 (step S20). When the present time is within the expiration-date (YES in step S20), step S12 is executed, and storage of the updated safing data is prohibited or permitted as described above. When the present time is out of the expiration-date (NO in step S20), the updated safing data is prohibited from being stored.

In this manner, the permission/impermission of restoration is determined with reference to the expiration-date information of the service provider updating flag F, the safing data generated by the safing data updating unit 2109 can be prevented from being accumulated in the user information terminal 3 by a malicious user and repeatedly restored in the mobile information terminal 2 after the expiration data. As described above, the safing data updated by the service provider server 1 can be stolen by a malicious program and restored in the same mobile information terminal. In order to prevent the illegal restoration described above, the expiration-date set in the service provider updating flag F can be can advantageously be set to be short, for example, 10 seconds after updating of the safing data.

### 5. Fifth Embodiment

As described in the first embodiment, when backup safing data stored in the user information terminal 3 is to be restored, the safing data request generating unit 2204 of the mobile information terminal 2 generates a safing data request including terminal identification information (IDt'), the holder identification information (IDu'), and, if necessary, the contents encrypting key (ek') and the contents encrypting key certification (c_ek') is generated (see FIG. 8). Furthermore, unique information is added to the safing data request itself to make it possible to effectively prevent illegal restoration.

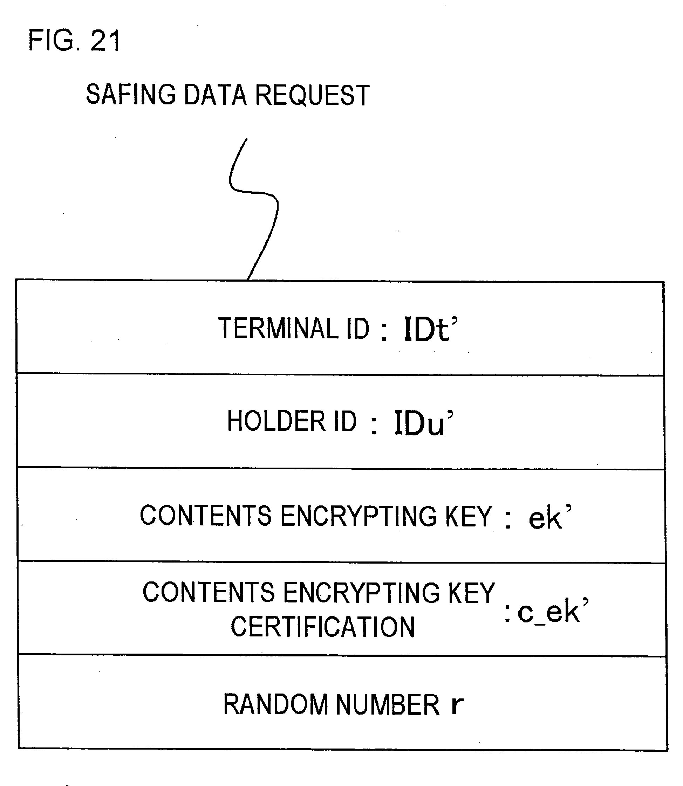

FIG. 21 is a pattern diagram showing a configuration of a safing data request in a fifth embodiment of the present invention. The safing data request in the embodiment is constituted by terminal identification information (IDt'), holder identification information IDu', a contents encrypting key (ek'), a contents encrypting key certification (c_ek'), and a random number r.

A safing data request generating unit 2204 according to the embodiment inputs the random number r generated by a random number generator to add the random number to a safing data request and holds the random number r. The safing data request including the random number r is transmitted to the user information terminal 3. When server inquiry is necessary, the updating request generating unit 2304 generates an updating request obtained by combining the backup safing data and the safing data request (seeFIG. 10). Therefore, in the embodiment, the safing data request part of the updating request includes the random number r. The updating request is transmitted to the service provider server 1.

As described in FIGS. 11A and 11B, the service provider updating flag (F) is set in the safing data updated by a service provider. In the first embodiment, the presence/absence of updating is determined by the updating flag F. However, the updating flag can be used not only as a flag representing the presence/absence of updating but also as information representing the random number r.
In the embodiment, the information of the random number r is added to the updating flag F of the updated safing data in the service provider server 1. An operation of the data safety checking unit 2206 in this case is as follows.

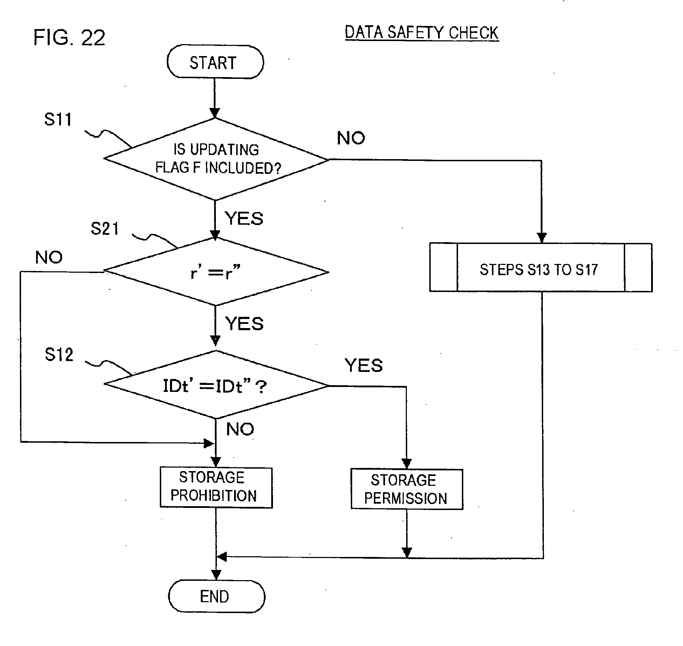

FIG. 22 is a flow chart showing an example of a data safety checking operation of the data safety checking unit 2206 when updated safing data including the random number r is received. The same reference numerals as in the flow chart in FIG. 12 denote the same steps in FIG. 22 and a description will not be shown.

When the safing data received from the user information terminal 3 includes the updating flag F (YES in step S11), the data safety checking unit 2206 reads a random number r' added to the updating flag F and compares the random number r' with a random number r" held in generation of safing data (step S21) . When r' = r" is satisfied (YES in step S21), step S12 is executed, and the updated safing data is prohibited or permitted from being stored. When r' ≠ r" is satisfied (NO in step S21), the updated safing data is prohibited from being stored.

In this manner, the permission/impermission of restoration is determined with reference to random number information of the service provider updating flag F to make it possible to prevent the safing data generated by the safing data updating unit 2109 frombeing accumulated in the user information terminal 3 by a malicious user and repeatedly restored in the mobile information terminal 2. In the embodiment, even though the mobile information terminal 2 has no reliable clock, illegal restoration can effectively be prevented.

### 6. Sixth Embodiment

### Another Example of Distribution Control Information

The distribution control information (P) shown in FIG. 6A is not limited to the flag configuration shown in FIG. 6B. The distribution control information (P) can also be procedurally described as a function of a program.

FIG. 23 is a pattern diagram showing an example of distribution control information described as a function of a program. In this case, the distribution control information is described in the C++ programming language, distribution control having the following contents can be performed. That is, "when terminal identification information is identical, restoration is permitted, when the date of holder identification information coincides with a specific day (in this case, February 14, 2004) designated by a service provider, restoration is permitted after server inquiry, and, otherwise, restoration is prohibited".

When the distribution control information is described by a program, the updating necessity/unnecessity determining unit 2303 and the data safety checking unit 2206 reads the distribution control program and executes the program to make it possible to perform the distribution control which is more flexible than flag-based updating necessity/unnecessity determination and flag-based data safety check shown in FIGS. 9 and 12.

## Claims

1. A digital information distribution control method in a system having a server performing a delivery service of digital information and an information processing terminal receiving the delivery service of the digital information,
wherein delivery data including the digital information and distribution control information representing a data transfer control condition is delivered from the server to the information processing terminal,
the delivery data is stored in the information processing terminal, and
transfer of information including the delivery data is controlled between the information processing terminal and another information processing terminal depending on the distribution control information.

2. The distribution control method according to claim 1,
wherein in the transfer control, the information including the delivery data generated by using unique information of the information processing terminal is transferred and stored in the other information processing terminal, and,
before the information including the delivery data stored in the other information processing terminal is re-stored in the information processing terminal, it is determined depending on the distribution control information whether re-storing in the information processing terminal is possible or impossible.

3. The distribution control method according to claim 1,
wherein in the transfer control, the information including the delivery data generated by using the unique information of the information processing terminal is transferred and stored in the other information processing terminal, and,
before the information including the delivery data stored in the other information processing terminal is re-stored in the information processing terminal, it is determined depending on the distribution control information whether inquiry at the server is possible or impossible.

4. The distribution control method according to claim 1,
wherein the distribution control information includes at least one of a transfer possibility/impossibility determination condition of the information including the delivery data and an inquiry possibility/impossibility determination condition at the server.

5. A digital information distribution control method in a system having a server for performing a delivery service of digital information and an information processing terminal for receiving the delivery service of the digital information,
wherein delivery data including the digital information and distribution control information representing a data transfer control condition is delivered from the server to the information processing terminal,
the delivery data is stored in the information processing terminal,
a first safing data including the delivery data is generated by using terminal unique information allocated to the information processing terminal and transferred to another information processing terminal,
before delivery data included in safing data stored in the other information processing terminal is re-stored in the information processing terminal, a safing data transmission request is transmitted to the other information processing terminal,
based on the terminal unique information of the information processing terminal, and terminal unique information and distribution control information included in second safing data corresponding to the safing data transmission request, it is determined whether the delivery data included in the second safing data can be re-stored in the information processing terminal or not, and
the delivery data included in the second safing data is stored in the information processing terminal when the delivery data can be re-stored.

6. The distribution control method according to claim 5,
wherein the distribution control information designates at least one of a transfer possibility/impossibility determination condition of the safing information and an inquiry possibility/impossibility determination condition at the server.

7. The distribution control method according to claim 6,
wherein when server inquiry is designated by the distribution control information of the second safing data, safing data inquiry including the second safing data and the safing data transmission request is transmitted to the server.

8. The distribution control method according to claim 7,
wherein the server determines whether updating of the second safing data included in the safing data inquiry is possible or impossible when the safing data inquiry is received,
when the updating is possible, updated safing data obtained by updating the second safing data by using server unique information allocated to the server is generated, and the updated safing data is returned as a response to the safing data inquiry, and
the information terminal receives the updated safing data as second safing data corresponding to the safing data transmission request.

9. The distribution control method according to claim 8,
wherein the updated safing data includes expiration-date information,
the information processing terminal, based on the terminal unique information of the information processing terminal, the terminal unique information ,expiration-date information, and distribution control information included in the second safing data, , determines whether the delivery data can be re-stored in the information processing terminal or not.

10. The distribution control method according to claim 8,
wherein the information processing terminal further adds the request specifying information to the safing data transmission request to transmit the safing data transmission request and the request specifying information to the other information processing terminal;
the server returns the updated safing data including the request specifying information, and
the information processing terminal, based on the terminal unique information of the information processing terminal, the terminal unique information request specifying information, and distribution control information included in the second safing data, determines whether the delivery data can be re-stored in the information processing terminal or not.

11. The distribution control method according to claim 10,
wherein the request specifying information is a random number generated in the data transmission request.

12. The distribution control method according to claim 5,
wherein the distribution control information designates at least one of a possibility/impossibility condition of data transfer, a necessity/unnecessity condition of encryption in information transfer, and an inquiry possibility/impossibility condition at the server.

13. The distribution control method according to claim 12,
wherein the terminal unique information includes at least the identification information of a distribution signature creating key, a distribution signature verifying key, a terminal certification, an encrypting key, an encrypting key certification, a decrypting key, and identification information.

14. The distribution control method according to claim 13,
wherein the information processing terminal
encrypts digital information included in the delivery data by using the encrypting key included in the terminal unique information when the distribution control information designates encryption in data transfer,
generates the first safing data by using the delivery data including the encrypted digital information to transfer the first safing data to the other information processing terminal, and
decrypts the encrypted digital information of the delivery data included in the second safing data by using the decrypting key included in the terminal unique information.

15. A mobile information terminal which receives delivery of the digital information from a server performing a delivery service of the digital information and which can perform data transfer with another information processing terminal for backup, comprising:
a delivery data storing unit which receives and stores delivery data including distribution control information representing a condition to regulate data transfer and the digital information from the server;
a terminal unique information storing unit which stores terminal unique information allocated to the mobile information terminal;
a safing data generating unit which generates the first safing data including the delivery data by using the terminal unique information to transfer the delivery data from the delivery data storing unit to the other information processing terminal, and which transmits the first safing data to the other information processing terminal;
a data transmission request generating unit which performs data transmission request to the other information processing terminal before the second safing data is received from the other information processing terminal to re-store delivery data included in the second safing data in the delivery data storing unit; and
a safing data verifying unit which verifies whether the second safing data can be re-stored or not by using the terminal unique information of the mobile information terminal and terminal unique information and distribution control information included in the second safing data when the second safing data is received from the other information processing terminal as a response to the data transmission request, and which stores the delivery data included in the second safing data in the delivery data storing unit.

16. The mobile information terminal according to claim 15, further comprising
a determining unit which determines whether transfer of the second safing data to the delivery data storing unit is possible or impossible by using the terminal unique information of the mobile information terminal and terminal unique information and distribution control information included in the second safing data when the second safing data is received from the other information processing terminal as a response of the data transmission request, and
wherein when the second safing data can be transferred to the delivery data storing unit, the safing data verifying unit verifies whether the second safing data can be restored or not.

17. The mobile information terminal according to claim 16,
wherein the distribution control information designates at least one of a possibility/impossibility condition of data transfer, a possibility/impossibility condition of inquiry at the server.

18. The mobile information terminal according to claim 17,
wherein the determining unit transmits safing data inquiry including the data transmission request and the second safing data to the server when server inquiry is designated by the distribution control information of the second safing data.

19. A server which performs a delivery service of digital information to an information processing terminal, comprising:
a server unique information storing unit which stores server unique information allocated to the server;
a delivery data management unit which generates delivery data including the digital information and distribution control information representing a data transfer control condition to deliver the delivery data to the information processing terminal; and
a safing data updating unit, when safing data inquiry including terminal unique information of the information processing terminal and requested safing data is received, determines whether updating of the safing data included in the safing data inquiry is possible or impossible, and which updates the safing data when the updating is possible to return the updated safing data as a response of the safing data inquiry.

20. An information processing apparatus which can be connected to a mobile information terminal receiving delivery data including distribution control information representing a condition to regulate data transfer and digital information from a server and which backs up the delivery data received by the mobile information terminal, comprising:
a safing data storing unit which stores a first safing data including the delivery data generated by using terminal unique information allocated to the mobile information terminal; and
a determining unit which receives safing data transmission request for re-storing the delivery data included in the first safing data stored in the safing data storing unit from the mobile information terminal and determines whether the stored first safing data is returned to the mobile information terminal as second safing data based on the received data transmission request and terminal unique information and distribution control information of the first safing data stored in the safing data storing unit.

21. A distribution control system having at least a server performing a delivery service of digital information, a first information processing terminal receiving delivery of the digital information, and a second information processing terminal which can perform data transfer with the first information processing terminal,
wherein the server has at least delivery data management unit which generates delivery data obtained by adding distribution control information representing a condition to regulate data transfer to the digital information to transmit the delivery data to the first information processing terminal;
the first information processing terminal has
at least a delivery data storing unit which stores the delivery data,
a terminal unique information storing unit which stores terminal unique information allocated to the first information processing terminal,
a safing data generating unit which generates the first safing data including the delivery data by using the terminal unique information to transfer the delivery data from the delivery data storing unit to the second information processing terminal and transmits the first safing data to the second information processing terminal
a data transmission request generating unit which receives second safing data from the second information processing terminal and performs data transmission request to the second information processing terminal to re-store the delivery data included in the second safing data in the delivery data storing unit, and
a safing data verifying unit which verifies whether the second safing data can be re-stored or not by using the terminal unique information when the second safing data is received from the second information processing terminal as a response of the data transmission request, and which stores delivery data included in the second safing data in the delivery data storing unit when the second safing data can be re-stored; and
the second information processing terminal has
at least a safing data storing unit whiches stores the first safing data transmitted from the first information processing terminal, and
a determining unit which determines, based on the data transmission request and terminal unique information and distribution control information of safing data stored in the safing data storing unit, whether the stored safing data is returned to the first information processing terminal as the second safing data or not.

22. A server program which causes a computer to realize a server function performing a delivery service of digital information to an information processing terminal, comprising:
the step of generating delivery data including the digital information and distribution control information representing a data transfer control condition to deliver the delivery data to the information processing terminal;
the step of, when safing data inquiry including terminal unique information of the information processing terminal and requested safing data is received, determining whether updating of the safing data included in the safing data inquiry is possible or impossible; and
the step of updating the safing data when the updating is possible to return the updated safing data as a response of the safing data inquiry.

23. A program for a mobile information terminal which causes a computer to receive delivery of the digital information from a server performing a delivery service of digital information and to execute data transfer with another information processing terminal for backup, comprising:
the step of receiving delivery data including distribution control information representing a condition to regulate data transfer and the digital information from the server and storing the delivery data;
the step of generating a first safing data including the delivery data by using the terminal unique information to transfer the delivery data to the other information processing terminal and transmitting the first safing data to the other information processing terminal;
the step of performing data transmission request to the other information processing terminal before second safing data is received from the other information processing terminal to re-store delivery data included in the second safing data in the delivery data storing unit;
the step of, when the second safing data is received from the other information processing terminal as a response to the data transmission request, verifying whether the second safing data can be re-stored or not by using the terminal unique information of the mobile information terminal and terminal unique information and distribution control information included in the second safing data; and
the step of re-storing delivery data included in the second safing data when the second safing data can be re-stored.

24. The program for a mobile information terminal according to claim 23, further comprising:
the step of determining whether transfer of the second safing data to the delivery data storing unit is possible or impossible by using the terminal unique information of the mobile information terminal and terminal unique information and distribution control information included in the second safing data when the second safing data is received from the other information processing terminal as a response of the data transmission request, and
the step of verifying whether the second safing data can be re-stored or not by using the safing data verifying unit when the second safing data can be transferred to the delivery data storing unit.
